# EUROPEAN PATENT APPLICATION

(11) **EP 4 421 907 A1**
(43) Date of publication of application: **28.08.2024**
(21) Application number: 22943044.2
(22) Date of filing: 24.05.2022
(51) Int. Cl.: H01M 4/36, H01M 4/58

(54) **POSITIVE ELECTRODE ACTIVE MATERIAL, POSITIVE ELECTRODE SHEET, SECONDARY BATTERY, BATTERY MODULE, BATTERY PACK AND ELECTRICAL APPARATUS**

(71) Applicant: Contemporary Amperex Technology Co., Limited, Ningde, Fujian 352100 (CN)
(72) Inventor: ZHANG, Xinxin, Ningde, Fujian 352100 (CN); YUAN, Tianci, Ningde, Fujian 352100 (CN); JIANG, Yao, Ningde, Fujian 352100 (CN); OUYANG, Chuying, Ningde, Fujian 352100 (CN); KANG, Weibin, Ningde, Fujian 352100 (CN); WU, Lingjing, Ningde, Fujian 352100 (CN); CHEN, Shangdong, Ningde, Fujian 352100 (CN)
(74) Representative: Gong, Jinping
(86) International application number: PCT/CN2022/094636
(87) International publication number: WO 2023/225838

(57) **Abstract**

Embodiments of this application provide a positive electrode active material, a positive electrode plate, a secondary battery, a battery module, a battery pack, and an electric apparatus. The positive electrode active material comprises a core and a shell enveloping the core. Chemical formula of the core is Li₁₊ₓMn_{1-y}A_{y}P_{1-z}R_{z}O₄, where A is one or more elements selected from Zn, Al, Na, K, Mg, Mo, W, Ti, V, Zr, Fe, Ni, Co, Ga, Sn, Sb, Nb, and Ge, and R is one or more elements selected from B, Si, N, and S. The shell includes a first coating layer, a second coating layer, and a third coating layer. The first coating layer includes a crystalline pyrophosphate LiₐMP₂O₇ and/or M_{b}(P₂O₇)_{c}, where each M is independently one or more elements selected from Fe, Ni, Mg, Co, Cu, Zn, Ti, Ag, Zr, Nb, and Al. The second coating layer includes a crystalline phosphate XPO₄, where X is one or more elements selected from Li, Fe, Ni, Mg, Co, Cu, Zn, Ti, Ag, Zr, Nb, and Al. The third coating layer includes a carbon matrix and a doping element, the doping element including one or more selected from nitrogen, phosphorus, sulfur, boron, and fluorine. The positive electrode active material exhibits high capacity and rate performance.

## Description

### TECHNICAL FIELD

This application relates to the field of battery technologies, and in particular, to a positive electrode active material, a positive electrode plate, a secondary battery, a battery module, a battery pack, and an electric apparatus.

### BACKGROUND

In recent years, with the development of lithium-ion secondary battery technologies, lithium-ion secondary batteries have been widely used in energy storage power supply systems such as hydroelectric, thermal, wind, and solar power plants, and many other fields including electric tools, electric bicycles, electric motorcycles, electric vehicles, military equipment, and aerospace. Due to the great development of lithium-ion secondary batteries, higher requirements are imposed on their energy density, cycling performance, safety performance, and the like.

Lithium manganese phosphate, as a positive electrode active material for lithium-ion secondary batteries, has the advantages of high capacity, good safety, and low cost. However, the rate performance of lithium manganese phosphate is poor, which restricts its commercial application.

### SUMMARY

This application provides a positive electrode active material, a positive electrode plate, a secondary battery, a battery module, a battery pack, and an electric apparatus to solve the problem that the positive electrode active material lithium manganese phosphate has poor rate performance.

According to a first aspect of this application, a positive electrode active material having a core-shell structure is provided and includes a core and a shell enveloping the core; where chemical formula of the core is Li₁₊ₓMn_{1-y}A_{y}P_{1-z}R_{z}O₄, where x is any value in the range of -0.100 to 0.100, y is any value in the range of 0.001 to 0.500, z is any value in the range of 0.001 to 0.100, A is one or more elements selected from a group consisting of Zn, Al, Na, K, Mg, Mo, W, Ti, V, Zr, Fe, Ni, Co, Ga, Sn, Sb, Nb, and Ge, and optionally one or more elements from a group consisting of Fe, Ti, V, Ni, Co, and Mg, and R is one or more elements selected from a group consisting of B, Si, N, and S, and optionally R is one element selected from B, Si, N, and S; the values of x, y, and z satisfy the following condition that the entire core is electrically neutral; the shell includes a first coating layer enveloping the core, a second coating layer enveloping the first coating layer, and a third coating layer enveloping the second coating layer; where the first coating layer includes a crystalline pyrophosphate LiₐMP₂O₇ and/or M_{b}(P₂O₇)_{c}, where 0≤a≤2, 1≤b≤4, 1≤c≤6, and the values of a, b, and c satisfy the following condition that the crystalline pyrophosphate LiₐMP₂O₇ or M_{b}(P₂O₇)_{c} is electrically neutral, and each M in the crystalline pyrophosphate LiₐMP₂O₇ and M_{b}(P₂O₇)_{c} is independently one or more elements selected from a group consisting of Fe, Ni, Mg, Co, Cu, Zn, Ti, Ag, Zr, Nb, and Al; the second coating layer includes a crystalline phosphate XPO₄, where X is one or more elements selected from a group consisting of Li, Fe, Ni, Mg, Co, Cu, Zn, Ti, Ag, Zr, Nb, and Al; and the third coating layer includes a carbon matrix and a doping element, the doping element including one or more selected from a group consisting of nitrogen, phosphorus, sulfur, boron, and fluorine.

In this specification, "crystalline" means that the crystallinity is above 50%, to be specific, from 50% to 100%. A crystallinity less than 50% is referred to as a glassy state. The crystalline pyrophosphate and crystalline phosphate in this application have a crystallinity of 50% to 100%. The pyrophosphate and phosphate with a certain crystallinity not only help to give full play to the ability of the pyrophosphate coating layer to hinder the manganese dissolution and the ability of the phosphate coating layer in conducting lithium ions and reducing the interfacial side reactions, but also enable the pyrophosphate coating layer and the phosphate coating layer to be better lattice matched so that the coating layers can be tightly bonded.

This application provides a new type of positive electrode active material lithium manganese phosphate having a core-shell structure by doping element A at the manganese site and element R at the phosphorus site of lithium manganese phosphate to obtain a doped lithium manganese phosphate core and applying three coating layers sequentially on the core surface. Applying the positive electrode active material of this application to a secondary battery can significantly improve the high-temperature cycling performance, cycling stability, and high-temperature storage performance of the secondary battery. In addition, introducing doping element atoms into the carbon layer alters the charge distribution around carbon atoms, improving the conductivity of the carbon layer. Additionally, the doping element creates a defect structure within the carbon material, facilitating the rapid migration of lithium ions. Further, the doping element generates a new functional group containing the doping element on the carbon surface, thereby forming new active sites, increasing the solvation and desolvation speed of lithium ions, and thus improving the capacity and rate performance.

In any embodiment of the first aspect, based on weight of the core, an application amount of the third coating layer is greater than 0wt% and less than or equal to 6wt%, optionally greater than 0wt% and less than or equal to 5.5wt%, and more optionally greater than 0wt% and less than or equal to 2wt%. In the positive electrode active material having a core-shell structure of some embodiments of this application, the application amount of the third coating layer is preferably in the foregoing range. In this way, the core is fully enveloped without reducing the gram capacity of the positive electrode active material, thereby further improving the kinetic performance and safety performance of the secondary battery.

In any embodiment of the first aspect, optionally, thickness of the third coating layer is 2-25 nm so that the electrical conductivity of the material can be improved and the compacted density performance of the battery electrode plate prepared using the positive electrode active material can be improved.

In any embodiment of the first aspect, a mass percentage of the doping element in the third coating layer is below 30%, and optionally, a mass percentage of the doping element in the third coating layer is below 20%. The doping element falling within the foregoing percentage range can improve the electrical conductivity of the pure carbon layer and effectively avoids excessive surface activity caused by adding an excessive amount of the doping element, thereby effectively controlling interfacial side reactions caused by excessive doping of the coating layer.

In any embodiment of the first aspect, optionally, the doping element is nitrogen, phosphorus, sulfur, boron, or fluorine. Selecting a single type of element as the doping element helps to control the performance of the doped carbon layer.

In any embodiment of the first aspect, optionally, the doping element is element nitrogen or element sulfur, and a mass percentage of the doping element in the doped carbon layer is 1%-15%. Nitrogen atoms and sulfur atoms have an atomic radius closer to carbon atoms and are unlikely to destroy the carbon skeleton. Therefore, with the doping amount of nitrogen or sulfur atoms falling within the foregoing relatively wide range, the conductivity of the doped carbon layer can be fully made use of, and the lithium ion transport and lithium ion desolvation capacity can be increased.

In any embodiment of the first aspect, optionally, the doping element is element phosphorus, element boron, or element fluorine, and a mass percentage of the doping element in the doped carbon layer is 0.5%-5%. Element phosphorus, element boron, and element fluorine have an atomic radius quite different from carbon atoms and are likely to destroy the carbon skeleton in a case of excessive doping. Therefore, with the doping amount of phosphorus, boron, and fluorine atoms falling within the foregoing relatively narrow range, the conductivity of the doped carbon layer can be fully made use of, and the lithium ion transport and lithium ion desolvation capacity can be increased.

In any embodiment of the first aspect, the crystalline pyrophosphate in the first coating layer has an interplanar spacing of 0.293-0.470 nm and an included angle of 18.00°-32.00° in the (111) orientation, and the crystalline phosphate in the second coating layer has an interplanar spacing of 0.244-0.425 nm and an included angle of 20.00°-37.00° in the (111) orientation. Both the first coating layer and the second coating layer in the positive electrode active material use a crystalline substance whose interplanar spacing and included angle range are in the foregoing ranges. In this way, the heterophase structures in the coating layer can be effectively avoided, thereby increasing the gram capacity of the material and improving the cycling performance and rate performance.

In any embodiment of the first aspect, a ratio of y to 1-y in the core is 1: 10 to 1:1, and optionally 1:4 to 1:1. This further improves the cycling performance and rate performance of the secondary battery.

In any embodiment of the first aspect, a ratio of z to 1-z in the core is 1:999 to 1:9, and optionally 1:499 to 1:249. This further improves the cycling performance and rate performance of the secondary battery.

In any embodiment of the first aspect, carbon in the third coating layer is a mixture of SP2 carbon and SP3 carbon; and optionally a molar ratio of SP2 carbon to SP3 carbon is any value in the range of 0.1-10, and optionally any value in the range of 1.5-3.0. This application improves the comprehensive performance of the secondary battery by limiting the molar ratio of SP2 carbon to SP3 carbon to be in the foregoing range.

In any embodiment of the first aspect, based on weight of the core, an application amount of the first coating layer is greater than 0wt% and less than or equal to 6wt%, optionally greater than 0wt% and less than or equal to 5.5wt%, and more optionally greater than 0wt% and less than or equal to 2wt%.

In any embodiment of the first aspect, based on weight of the core, an application amount of the second coating layer is greater than 0wt% and less than or equal to 6wt%, optionally greater than 0wt% and less than or equal to 5.5wt%, and more optionally from 2wt% to 4wt%.

In the positive electrode active material having a core-shell structure of some embodiments of this application, the application amounts of the first coating layer and the second coating layer are preferably in the foregoing ranges. In this way, the core can be fully enveloped and the kinetic performance and safety performance of the secondary battery can be further improved without reducing the gram capacity of the positive electrode active material.

In any embodiment of the first aspect, thickness of the first coating layer is 1-10 nm, and/or thickness of the second coating layer is 2-15 nm.

With the thickness of the first coating layer falling within the range of 1-10 nm, it can avoid a possible unfavorable effect caused by an excessively thick first coating layer on the kinetic performance of the material, and avoid the problem that the migration of the transition metal ions cannot be hindered effectively in a case of an excessively thin first coating layer. With the thickness of the second coating layer falling within the range of 2-15 nm, the second coating layer has a stable surface structure and small side reactions with the electrolyte. Therefore, the interfacial side reactions can be effectively mitigated, thereby improving the high-temperature performance of the secondary battery.

In any embodiment of the first aspect, based on weight of the positive electrode active material having a core-shell structure, a percentage of element manganese is in the range of 10wt%-35wt%, optionally in the range of 15wt%-30wt%, and more optionally in the range of 17wt%-20wt%, and a percentage of element phosphorus is in the range of 12wt%-25wt%, and optionally in the range of 15wt%-20wt%, a weight ratio of element manganese to element phosphorus being in the range of 0.90-1.25, and optionally 0.95-1.20.

In the positive electrode active material having a core-shell structure of some embodiments of this application, the percentage of element manganese being in the foregoing range can effectively avoid problems such as deterioration of the stability of the material structure and decrease in density that may be caused by an excessively high percentage of element manganese, thereby effectively improving the performance of the secondary battery in terms of cycling, storage, compacted density, and so on, and avoid problems such as low voltage plateau that may be caused by an excessively low percentage of element manganese, thereby improving the energy density of the secondary battery.

In the positive electrode active material having a core-shell structure of some embodiments of this application, the percentage of element phosphorus being in the foregoing range can effectively avoid the following cases: an excessively high percentage of element phosphorus may lead to a so strong covalency of P-O that the conductivity of small polarons is affected, thus affecting the electrical conductivity of the material; and an excessively low percentage of element phosphorus may decrease the stability of the lattice structure of the core, pyrophosphate in the first coating layer, and/or phosphate in the second coating layer, thereby affecting the overall stability of the material.

In the positive electrode active material having a core-shell structure of some embodiments of this application, the weight ratio of element manganese to element phosphorus being in the foregoing range can effectively avoid the following cases: an excessively large weight ratio may lead to an increase in the transition metal dissolved, affecting the improvement in material stability, and cycling and storage performance of the secondary battery; and an excessively small weight ratio may lead to a decrease in the discharge voltage plateau of the material, making it impossible to effectively increase the energy density of the secondary battery.

In any embodiment of the first aspect, a lattice change rate of the positive electrode active material having a core-shell structure before and after complete deintercalation or intercalation of lithium is below 4%, optionally below 3.8%, and more optionally from 2.0% to 3.8%.

The positive electrode active material having a core-shell structure can allow for a low lattice change rate of below 4% before and after deintercalation or intercalation of lithium, so the use of the positive electrode active material can improve the gram capacity and the rate performance of the secondary battery.

In any embodiment of the first aspect, Li/Mn anti-site defect concentration of the positive electrode active material having a core-shell structure is below 4%, optionally below 2.2%, and more optionally from 1.5% to 2.2%. The Li/Mn anti-site defect concentration being in the foregoing range can prevent Mn²⁺ from hindering the transport of Li⁺ and improve the gram capacity and rate performance of the positive electrode active material.

In any embodiment of the first aspect, compacted density under 3T (ton) of the positive electrode active material having a core-shell structure is above 2.2 g/cm³, and optionally above 2.2 g/cm³ and below 2.8 g/cm³. Therefore, increasing the compacted density increases the weight of the active material per unit volume, which is more conducive to increasing the volumetric energy density of the secondary battery.

In any embodiment of the first aspect, a surface oxygen valence of the positive electrode active material having a core-shell structure is below -1.90, and optionally from -1.90 to -1.98. Therefore, limiting the surface oxygen valence of the positive electrode active material to be in the foregoing range can mitigate the interfacial side reactions between the positive electrode material and the electrolyte, thereby improving the performance of the cell in terms of cycling, high temperature storage, and the like and suppressing gas production.

A second aspect of this application provides a positive electrode plate including a positive electrode current collector and a positive electrode film layer provided on at least one surface of the positive electrode current collector, where the positive electrode film layer includes the positive electrode active material according to any one of the first aspect; and optionally, based on total weight of the positive electrode film layer, a percentage of the positive electrode active material in the positive electrode film layer is above 10wt%, and further optionally from 95wt% to 99.5wt%.

A third aspect of this application provides a secondary battery including the positive electrode active material according to any one of the first aspect or the positive electrode plate according to the third aspect.

A fourth aspect of this application provides a battery module including a secondary battery, where the secondary battery is the secondary according to the third aspect.

A fifth aspect of this application provides a battery pack including a battery module, where the battery module is the battery module according to the fourth aspect.

A sixth aspect of this application provides an electric apparatus including a secondary battery, a battery module, or a battery pack, where the secondary battery is selected from the secondary battery according to the fourth aspect, the battery module is the battery module according to the fifth aspect, or the battery pack is the battery pack according to the sixth aspect.

With its characteristics, the positive electrode active material of this application enables a secondary battery, battery module, and battery pack containing the same to have high cycling performance and rate performance, thus providing high kinetic cycling stability and rate performance for an electric apparatus having the secondary battery, battery module, or battery pack of this application.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 is a schematic diagram of a positive electrode active material having a core-shell structure according to this application.
FIG. 2 is a schematic diagram of a secondary battery according to an embodiment of this application.
FIG. 3 is an exploded view of the secondary battery according to the embodiment of this application in FIG. 2.
FIG. 4 is a schematic diagram of a battery module according to an embodiment of this application.
FIG. 5 is a schematic diagram of a battery pack according to an embodiment of this application.
FIG. 6 is an exploded view of the battery pack according to the embodiment of this application in FIG. 5.
FIG. 7 is a schematic diagram of an electric apparatus using a secondary battery as a power source according to an embodiment of this application.

In the accompanying drawings, the figures are not necessarily drawn to scale.

Reference signs are described as follows:
1. battery pack; 2. upper box body; 3. lower box body; 4. battery module; 5. secondary battery; 51. housing; 52. electrode assembly; and 53. top cover assembly.

### DESCRIPTION OF EMBODIMENTS

The following further describes embodiments of this application in detail with reference to the accompanying drawings and examples. The detailed description of the embodiments and the accompanying drawings are intended to illustrate the principle of this application, rather than to limit the scope of this application, meaning this application is not limited to the embodiments described herein.

The following specifically discloses embodiments of a positive electrode active material, a positive electrode plate, a secondary battery, a battery module, a battery pack, and an electric apparatus of this application with appropriate reference to detailed descriptions of accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions

Unless otherwise specified, all the steps in this application can be performed sequentially or randomly, and preferably, are performed sequentially. For example, a method including steps (a) and (b) indicates that the method may include steps (a) and (b) performed sequentially, or may include steps (b) and (a) performed sequentially. For example, that the method may further include step (c) indicates that step (c) may be added to the method in any sequence. For example, the method may include steps (a), (b), and (c), or steps (a), (c), and (b), or steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

### [Secondary battery]

Secondary batteries, also referred to as rechargeable batteries or storage batteries, are batteries whose active material can be activated for continuous use through charging after the batteries are discharged.

Generally, a secondary battery includes a positive electrode plate, a negative electrode plate, a separator, and an electrolyte. During charging and discharging of the battery, active ions (for example, lithium ions) migrate between the positive electrode plate and the negative electrode plate. The separator is sandwiched between the positive electrode plate and the negative electrode plate to mainly prevent short circuits between the positive and negative electrodes and allow active ions to pass through. The electrolyte is between the positive electrode plate and the negative electrode plate to mainly conduct active ions.

### [Positive electrode active material]

It should be noted that in this specification, the term "coating layer" is a substance layer enveloping the lithium manganese phosphate core, the substance layer can completely or partially envelope the core, and the use of "coating layer" is only for ease of description but not intended to limit the present invention. Similarly, the term "thickness of the coating layer" refers to thickness of the substance layer applied on the lithium manganese phosphate core in a radial direction of the lithium manganese phosphate core.

The inventors of this application have found in actual operation that the existing positive electrode active material lithium manganese phosphate at present experiences severe manganese dissolution during deep charge and discharge. Although attempts have been made in the prior art to coat lithium manganese phosphate with lithium iron phosphate to reduce interfacial side reactions, such coating cannot prevent dissolved manganese from migrating into the electrolyte. The dissolved manganese is reduced to metal manganese after migrating to the negative electrode. The metal manganese produced in such a way is equivalent to a "catalyst", which can catalyze the decomposition of an SEI (solid electrolyte interphase, solid electrolyte interphase) film on the surface of the negative electrode, thereby generating by-products. Part of the by-products is gas, and accordingly, the secondary battery swells, affecting the safety performance of the secondary battery. In addition, the other part of the by-products is deposited on the surface of the negative electrode to block the channel for lithium ions to deintercalate from or intercalate into the negative electrode, causing an increase in the impedance of the secondary battery and thus affecting the kinetic performance of the secondary battery. In addition, to compensate for the lost SEI film, the electrolyte and the active lithium inside the battery are continuously consumed, which has irreversible effects on the capacity retention rate of the secondary battery.

After extensive research, the inventors have found that by modifying lithium manganese phosphate and implementing multi-layer coating on lithium manganese phosphate, a new type of positive electrode active material having a core-shell structure can be obtained. The positive electrode active material can significantly reduce the dissolved manganese and reduce the lattice change rate, and therefore, when used in a secondary battery, can improve the cycling performance, rate performance, safety performance, and safety performance of the battery and increase the capacity of the battery.

An embodiment of this application provides a positive electrode active material having a core-shell structure including a core and a shell enveloping the core; where chemical formula of the core is Li₁₊ₓMn_{1-y}A_{y}P_{1-z}R_{z}O₄, where x is any value in the range of -0.100 to 0.100, y is any value in the range of 0.001 to 0.500, for example, 0.001, 0.005, 0.01, 0.05, 0.100, 0.200, 0.300, 0.400, or 0.500, z is any value in the range of 0.001 to 0.100, for example, 0.001, 0.005, 0.010, 0.020, 0.030, 0.040, 0.050, 0.060, 0.070, 0.080, 0.090, or 0.100, Ais one or more elements selected from a group consisting of Zn, Al, Na, K, Mg, Mo, W, Ti, V, Zr, Fe, Ni, Co, Ga, Sn, Sb, Nb, and Ge, and optionally one or more elements from a group consisting of Fe, Ti, V, Ni, Co, and Mg, and R is one or more elements selected from a group consisting of B, Si, N, and S, and optionally R is one element selected from B, Si, N, and S; the values of x, y, and z satisfy the following condition that the entire core is electrically neutral; the shell includes a first coating layer enveloping the core, a second coating layer enveloping the first coating layer, and a third coating layer enveloping the second coating layer; where the first coating layer includes a crystalline pyrophosphate LiₐMP₂O₇ and/or M_{b}(P₂O₇)_{c}, where 0≤a≤2, 1≤b≤4, 1≤c≤6, and the values of a, b, and c satisfy the following condition that the crystalline pyrophosphate LiₐMP₂O₇ or M_{b}(P₂O₇)_{c} is electrically neutral, and each M in the crystalline pyrophosphate LiₐMP₂O₇ and M_{b}(P₂O₇)_{c} is independently one or more elements selected from a group consisting of Fe, Ni, Mg, Co, Cu, Zn, Ti, Ag, Zr, Nb, and Al; the second coating layer includes a crystalline phosphate XPO₄, where X is one or more elements selected from a group consisting of Li, Fe, Ni, Mg, Co, Cu, Zn, Ti, Ag, Zr, Nb, and Al; and the third coating layer includes a carbon matrix and a doping element, the doping element including one or more selected from a group consisting of nitrogen, phosphorus, sulfur, boron, and fluorine.

Unless otherwise specified, in the foregoing chemical formula of the core, when A is two or more elements, the foregoing limitation on the numerical range of y is not only a limitation on the stoichiometric number of each element as A but also a limitation on the sum of the stoichiometric numbers of all elements denoted by A. For example, when A is two or more elements: A1, A2, ..., An, the stoichiometric numbers y1, y2, ..., yn of all of A1, A2, ..., An must fall within the value range defined by this application for y, and the sum of y1, y2, ..., yn must also fall within the value range. Similarly, in a case that R is two or more elements, the limitation on the value range of the stoichiometric number of R in this application also has the foregoing meaning.

In some optional embodiments, when A is one, two, three, or four elements selected from a group consisting of Zn, Al, Na, K, Mg, Mo, W, Ti, V, Zr, Fe, Ni, Co, Ga, Sn, Sb, Nb, and Ge, A_{y} is Qₙ₁Dₙ₂Eₙ₃Kₙ₄, where n1+n2+n3+n4=y, n1, n2, n3, and n4 are all positive numbers but are not all zero, Q, D, E, and K are each independently one selected from a group consisting of Zn, Al, Na, K, Mg, Mo, W, Ti, V, Zr, Fe, Ni, Co, Ga, Sn, Sb, Nb, and Ge, and optionally, at least one of Q, D, E, and K is Fe. Optionally, one of n1, n2, n3, and n4 is zero and the rest are not zero; more optionally, two of n1, n2, n3, and n4 are zero and the rest are not zero; and further optionally, three of n1, n2, n3, and n4 are zero and the rest is not zero. In the core Li₁₊ₓMn_{1-y}A_{y}P_{1-z}R_{z}O₄, it is advantageous to dope one, two, three, or four of the foregoing element A at the manganese site, optionally, dope one, two, or three of the foregoing element A. Furthermore, it is advantageous to dope one or two of element R at the phosphorus site, which facilitates a uniform distribution of the doping elements.

In the core Li₁₊ₓMn_{1-y}A_{y}P_{1-z}R_{z}O₄, the magnitude of x is influenced by the magnitude of the valences of A and R and the magnitudes of y and z so as to ensure that the entire system is electrically neutral. If the value of x is too small, the percentage of lithium of the entire core system decreases, which affects the gram capacity utilization of the material. The y value limits the total amount of all doping elements. A too-small y value, that is, an excessively low doping amount, makes the doping elements useless, and y being more than 0.5 leads to little Mn in the system and affects the voltage plateau of the material. Therefore, the y value is limited to 0.001-0.500. Element R doping occurs at the P site. Because the P-O tetrahedron is relatively stable and a too large z value affects the stability of the material, the z value is defined to 0.001-0.100.

The positive electrode active material of this application can improve the gram capacity, cycling performance, and safety performance of the secondary battery. Although the mechanism is still unclear, it is presumed that this is because the positive electrode active material lithium manganese phosphate of this application is a core-shell structure. Doping element A and element R respectively at the manganese site and phosphorus site of the lithium manganese phosphate core can not only effectively alleviate manganese dissolution and thus reduce manganese ions migrated to the negative electrode, reduce the electrolyte consumed due to SEI film decomposition, and improve the cycling performance and safety performance of the secondary battery, but also promote the adjustment of the Mn-O bond, reduce the migration barrier of lithium ions, promote the migration of lithium ions, and improve the rate performance of the secondary battery. Enveloping the core with the first coating layer including crystalline pyrophosphate can further increase the migration resistance of manganese, reduce the manganese dissolved, decrease the amount of impurity lithium on the surface, and reduce the contact between the core and the electrolyte, thereby reducing interfacial side reactions, reducing gas produced, and improving the high-temperature storage performance, cycling performance, and safety performance of the secondary battery. Further, applying the crystalline phosphate coating layer with excellent lithium ion conductivity can effectively reduce the interfacial side reactions on the surface of the positive electrode active material, thus improving the high-temperature cycling and storage performance of the secondary battery. Still further, applying the doped carbon layer as the third coating layer can further improve the safety performance and kinetic performance of the secondary battery.

In addition, element A doped at the manganese site of lithium manganese phosphate in the core further helps to reduce the lattice change rate of lithium manganese phosphate in the process of lithium deintercalation or intercalation, improve the structural stability of the positive electrode material lithium manganese phosphate, significantly reduce the manganese dissolved, and reduce the oxygen activity on the surface of the particles. Element R doped at the phosphorus site further helps to change difficulty in changing the Mn-O bond length, thereby improving the electronic conductivity, reducing the migration barrier of lithium ions to promote the migration of lithium ions, and improving the rate performance of the secondary battery.

In addition, the entire core system is electrically neutral, which can ensure that there are as few defects and heterophase structures in the positive electrode active material as possible. If there is an excess of transition metal (for example, manganese) present in the positive electrode active material, the excess transition metal is likely to precipitate out as an elementary substance or form heterophase structures inside the lattice due to the inherently stable structure of the material system. Therefore, making the system electrically neutral can minimize such heterophase structures. In addition, ensuring the electrical neutrality of the system can also lead to lithium vacancies in the material in some cases, resulting in better kinetic performance.

Process control (for example, mixing and grinding of the material sources) can ensure that the elements are uniformly distributed in the lattice without aggregation. The positions of the main characteristic peaks in an XRD pattern of lithium manganese phosphate doped with element A and element R are the same as those of LiMnPO₄ without doping, indicating that the doping process does not introduce impurity phases. Therefore, the improvement on the performance of the core mainly comes from elemental doping rather than impurity phases. After the positive electrode active material described in this application is prepared, the inventors of this application cut the middle region of the prepared positive electrode active material particles through focused ion beam (FIB for short). Tests conducted through a transmission electron microscope (TEM for short) and X-ray energy spectrum analysis (EDS for short) show that the elements are uniformly distributed without aggregation.

In this application, the crystalline means that the crystallinity is above 50%, to be specific, from 50% to 100%. A crystallinity less than 50% is referred to as a glassy state. The crystalline pyrophosphate and crystalline phosphate described in this application have a crystallinity of 50% to 100%. The pyrophosphate and phosphate with a specific crystallinity not only help to give full play to the ability of the pyrophosphate coating layer to hinder the manganese dissolution and the ability of the phosphate coating layer in conducting lithium ions and reducing the interfacial side reactions, but also enable the pyrophosphate coating layer and the phosphate coating layer to be better lattice matched so that the coating layers can be more tightly bonded.

In this application, the crystallinity of the crystalline pyrophosphate in the first coating layer substance and the crystalline phosphate in the second coating layer substance of the positive electrode active material can be tested by using conventional technical means in the art, for example, by using density, infrared spectroscopy, differential scanning calorimetry, and nuclear magnetic resonance absorption methods, and also by using, for example, X-ray diffraction.

A specific method of testing the crystallinity of the crystalline pyrophosphate in the first coating layer and the crystalline phosphate in the second coating layer of the positive electrode active material by using X-ray diffraction can include the following steps:
taking a specific amount of the positive electrode active material powder, and measuring a total scattering intensity by X-ray, where the total scattering intensity is a sum of scattering intensities of substances in the entire space and is only related to the intensity of the primary rays, the chemical structure of the positive electrode active material powder, the total number of electrons participating in the diffraction, that is, the mass, but not related to the order state of the sample; and separating crystalline scattering from non-crystalline scattering in the diffractogram, where the crystallinity is a ratio of a scattering intensity of the crystalline part to the total scattering intensity.

It should be noted that in this application, the crystallinity of the pyrophosphate and phosphate in the coating layer can be adjusted, for example, by adjusting the process conditions such as sintering temperature and sintering time of the sintering process.

In this application, metal ions are difficult to migrate in the pyrophosphate, and therefore, the pyrophosphate as the first coating layer can effectively isolate doping metal ions from the electrolyte. The crystalline pyrophosphate has a stable structure, so application of the crystalline pyrophosphate can effectively suppress the dissolution of transition metals and improve the cycling performance.

The bonding between the first coating layer and the core is similar to a heterojunction, and the firmness of the bonding is limited by the degree of lattice match. When the lattice mismatch is below 5%, the lattice match is better and the two are easily bound tightly. The tight bonding can ensure that the coating layer does not fall off in the subsequent cycling process, thereby helping to ensure the long-term stability of the material. The degree of bonding between the first coating layer and the core is mainly measured by calculating the degree of mismatch between lattice constants of the core and the coating layer. In this application, compared with the core doped with no elements, the core doped with elements A and R has an increased match with the first coating layer, and the core can be more tightly bonded to the pyrophosphate coating layer.

Crystalline phosphate is selected as the second coating layer because it has a relatively high lattice match with the first coating layer substance crystalline pyrophosphate (the mismatch is only 3%). In addition, the phosphate itself has better stability than the pyrophosphate. Therefore, using the phosphate for enveloping the pyrophosphate helps to improve the stability of the material. Crystalline phosphate has a stable structure and an excellent ability to conduct lithium ions. Therefore, using crystalline phosphate for enveloping can effectively reduce the interfacial side reactions on the surface of the positive electrode active material, thereby improving the high-temperature cycling and storage performance of the secondary battery.

The main reason for using carbon as the third coating layer is that the carbon layer has good electronic conductivity. An electrochemical reaction occurs during application of the secondary battery, which requires the participation of electrons. Therefore, to promote the electron transport between particles and the electron transport at different positions on the particles, carbon with excellent electrical conductivity can be used for enveloping the positive electrode active material. Carbon enveloping can effectively improve the electrical conductivity and desolvation of the positive electrode active material. In addition, introducing doping element atoms into the carbon layer alters the charge distribution around carbon atoms, improving the conductivity of the carbon layer. Additionally, the doping element creates a defect structure within the carbon material, facilitating the rapid migration of lithium ions. Further, the doping element generates a new functional group containing the doping element on the carbon surface, thereby forming new active sites, increasing the solvation and desolvation speed of lithium ions, and thus improving the capacity and rate performance.

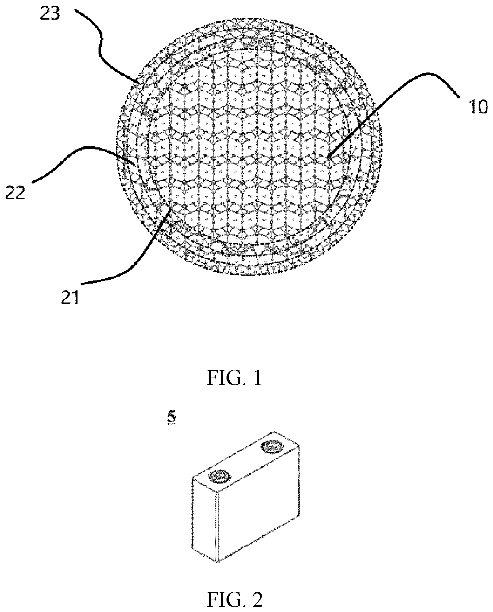

FIG. 1 is a schematic diagram of an ideal positive electrode active material having a three-layer coating structure. As shown in the figure, the innermost circle schematically represents the core 10, followed by the first coating layer 21, the second coating layer 22, and the third coating layer 23 in turn from the inside out. The diagram represents the ideal state in which each layer implements full enveloping. In practice, each coating layer may implement full or partial enveloping.

In some embodiments of the first aspect, based on weight of the core, an application amount of the third coating layer is greater than 0wt% and less than or equal to 6wt%, optionally greater than 0wt% and less than or equal to 5.5wt%, and more optionally greater than 0wt% and less than or equal to 2wt%. The third coating layer mainly promotes the electron transport between particles. However, because the structure also contains a large amount of amorphous carbon, the density of the third coating layer is low. Therefore, if the application amount is too large, the compacted density of the electrode plate is affected. In the positive electrode active material having a core-shell structure of some embodiments of this application, the application amount of the third coating layer is preferably in the foregoing range. In this way, the core is fully enveloped in a way that the gram capacity is minimally affected, thereby further improving the kinetic performance and safety performance of the secondary battery without reducing the gram capacity of the positive electrode active material.

In some embodiments of the first aspect, optionally, thickness of the third coating layer is 2-25 nm so that the electrical conductivity of the material can be improved and the compacted density performance of the battery electrode plate prepared using the positive electrode active material can be improved. In some embodiments, the thickness of the third coating layer may be about 2 nm, about 3 nm, about 4 nm, about 5 nm, about 6 nm, about 7 nm, about 8 nm, about 9 nm, about 10 nm, about 11 nm, about 12 nm, about 13 nm, about 14 nm, about 15 nm, about 16 nm, about 17 nm, about 18 nm, about 19 nm, about 20 nm, about 21 nm, about 22 nm, about 23 nm, about 24 nm, or about 25 nm, or in any range defined by any of these values.

Although the doped carbon layer has an advantage of better conductivity over the pure carbon layer, a higher percentage of the doping element in the doped carbon layer means a more active shell layer. In some embodiments of the first aspect, the mass percentage of the doping element in the doped carbon layer is below 30%; and optionally, the mass percentage of the doping element in the doped carbon layer is below 20%. The doping element within the foregoing percentage range can improve the electrical conductivity of the pure carbon layer and effectively avoids excessive surface activity caused by adding an excessive amount of the doping element, thereby effectively controlling interfacial side reactions caused by excessive doping of the third coating layer.

The doping elements in the shell layer of the positive electrode active material in this application may be a single type of element or a combination of multiple types of elements. Because different types of doping elements have different conductivity and abilities to form surface defects, to more precisely adjust the performance of the doped carbon layer, in any embodiment of the first aspect, optionally, the doping element is nitrogen, phosphorus, sulfur, boron, or fluorine. Selecting a single type of element as the doping element helps to control the performance of the doped carbon layer.

Furthermore, because different elements have different conductivity and abilities to form surface defects, to fully utilize the effects of the doping elements, experiments are conducted to determine the percentages of different types of doping elements.

In some embodiments of the first aspect, optionally, the doping element is element nitrogen or element sulfur, and a mass percentage of the doping element in the doped carbon layer is 1%-15%. Nitrogen atoms and sulfur atoms have an atomic radius closer to carbon atoms and are unlikely to destroy the carbon skeleton. Therefore, with the doping amount of nitrogen or sulfur atoms falling within the foregoing relatively wide range, the conductivity of the doped carbon layer can be fully made use of, and the lithium ion transport and lithium ion desolvation capacity can be increased.

In some embodiments of the first aspect, optionally, the doping element is element phosphorus, element boron, or element fluorine, and a mass percentage of the doping element in the doped carbon layer is 0.5%-5%. Element phosphorus, element boron, and element fluorine have an atomic radius quite different from carbon atoms and are likely to destroy the carbon skeleton in a case of excessive doping. Therefore, with the doping amount of phosphorus, boron, and fluorine atoms falling within the foregoing relatively narrow range, the conductivity of the doped carbon layer can be fully made use of, and the lithium ion transport and lithium ion desolvation capacity can be increased.

In some embodiments of the first aspect, the crystalline pyrophosphate in the first coating layer has an interplanar spacing of 0.293-0.470 nm and an included angle of 18.00°-32.00° in the (111) orientation, and the crystalline phosphate in the second coating layer has an interplanar spacing of 0.244-0.425 nm and an included angle of 20.00°-37.00° in the (111) orientation.

Both the first coating layer and the second coating layer in the positive electrode active material use a crystalline substance. The crystalline pyrophosphate and crystalline phosphate having the interplanar spacing and included angle in the foregoing ranges can more effectively suppress the lattice change rate and Mn dissolution of lithium manganese phosphate during deintercalation or intercalation of lithium, thereby enhancing the high-temperature cycling performance, cycling stability, and high-temperature storage performance of the secondary battery.

The crystalline pyrophosphate and crystalline phosphate in the coating layers may be characterized by means of conventional technical means in the art, or may be characterized, for example, by means of transmission electron microscopy (TEM). Under the TEM, the core and the coating layer can be distinguished by measuring the interplanar spacing.

The specific method of measuring the interplanar spacing and included angle of the crystalline pyrophosphate and the crystalline phosphate in the coating layers can include the following steps:
taking a specific amount of coated positive electrode active material sample powder in a test tube, injecting the test tube with a solvent such as alcohol, and stirring and dispersing the mixture thoroughly; taking an appropriate amount of the resulting solution with a clean disposable plastic pipette, and dropping the solution on a 300-mesh copper grid, part of the powder remaining on the copper grid at this point; transferring the copper grid together with the sample to the TEM sample cavity for testing, obtaining an original picture under the TEM test; and saving the original picture.

The original picture obtained in the TEM test is opened in the diffractometer software, Fourier transform is performed to get a diffraction pattern, a distance from a diffraction spot to the center of the diffraction pattern is measured to get the interplanar spacing, and the included angle is calculated according to the Bragg equation.

The range of interplanar spacing of crystalline pyrophosphate differs from that of crystalline phosphate, and it can be directly determined by the values of the interplanar spacings.

In some embodiments, a ratio of y to 1-y in the core is 1: 10 to 1:1, and optionally 1:4 to 1:1. Herein, y denotes the sum of the stoichiometric numbers of element A doping at Mn site. The energy density and cycling performance of the secondary battery using the positive electrode active material can be further improved when the preceding conditions are met.

In some embodiments, a ratio of z to 1-z in the core is 1:9 to 1:999, and optionally 1:499 to 1 :249. Herein, z denotes the sum of the stoichiometric numbers of element R doping at P site. The energy density and cycling performance of the secondary battery using the positive electrode active material can be further improved when the preceding conditions are met.

In some embodiments, the carbon of the third coating layer is a mixture of SP2 carbon and SP3 carbon; and optionally, a molar ratio of the SP2 carbon to the SP3 carbon is any value in the range of 0.1 to 10, and optionally, any value in the range of 2.0 to 3.0.

In some embodiments, a molar ratio of SP2 carbon to SP3 carbon may be about 0.1, about 0.2, about 0.3, about 0.4, about 0.5, about 0.6, about 0.7, about 0.8, about 0.9, about 1, about 2, about 3, about 4, about 5, about 6, about 7, about 8, about 9, or about 10, or in any range defined by any of these values. In this application, being "about" a value indicates a range of ±10% of that value.

The morphology of carbon in the third coating layer is selected to improve the overall electrical performance of the secondary battery. Specifically, by using a mixture of SP2 carbon and SP3 carbon and limiting the ratio of SP2 carbon to SP3 carbon to be in a certain range, the following situations can be avoided: if the carbon in the coating layer is all in the amorphous SP3 carbon, the electrical conductivity is poor; and if the carbon in the coating layer is all in the graphitized SP2 morphology, the electrical conductivity is good, but the quantity of lithium ion pathways is small, which is not conducive to the deintercalation of the lithium. In addition, limiting the molar ratio of SP2 carbon to SP3 carbon to be in the above range can not only implement good electrical conductivity but also guarantee lithium ion pathways, and therefore, is beneficial to the function implementation and cycling performance of the secondary battery.

The mixing ratio of SP2 carbon to SP3 carbon of the third coating layer can be controlled by sintering conditions such as sintering temperature and sintering time. For example, under the condition that sucrose is used as the carbon source to prepare the third coating layer, the sucrose is deposited on the second coating layer after pyrolysis, and under the action of high temperature, a carbon coating layer with both SP3 carbon and SP2 carbon is produced. The ratio of SP2 carbon to SP3 carbon can be controlled by selecting the pyrolysis and sintering conditions.

The structure and characteristics of the third coating layer carbon can be measured by Raman (Raman) spectroscopy, and the specific measurement method is as follows: splitting the energy spectrum of the Raman test to obtain Id/Ig (where Id is a peak intensity of SP3 carbon and Ig is a peak intensity of SP2 carbon), and then determining the molar ratio therebetween.

In some embodiments, based on weight of the core, an application amount of the first coating layer is greater than 0wt% and less than or equal to 6wt%, optionally greater than 0wt% and less than or equal to 5.5wt%, and more optionally greater than 0wt% and less than or equal to 2wt%; and/or an application amount of the second coating layer is greater than 0wt% and less than or equal to 6wt% based on weight of the core, optionally greater than 0wt% and less than or equal to 5.5wt%, and more optionally, from 2wt% to 4wt%.

In this application, the application amount of each layer is not zero.

In the positive electrode active material having a core-shell structure of some embodiments of this application, the application amount of the first coating layer and the application amount of the second coating layer are preferably in the foregoing ranges. In this way, the core can be fully enveloped and the kinetic performance and safety performance of the secondary battery can be further improved without reducing the gram capacity of the positive electrode active material.

For the first coating layer, limiting an application amount to be in the foregoing range can avoid the following cases: if the application amount is too small, it means that the thickness of the coating layer is relatively thin and the migration of the transition metal may not be effectively hindered; if the application amount is too large, it means that the coating layer is too thick, which may affect the migration of the Li⁺, and thus affecting the rate performance of the material.

For the second coating layer, limiting an application amount to be in the foregoing range can avoid the following cases: if the application amount is too large, the overall plateau voltage of the material may be affected; and if the application amount is too small, a sufficient enveloping effect may not be realized.

In some embodiments, thickness of the first coating layer is 1-10 nm, and/or thickness of the second coating layer is 2-15 nm.

In some embodiments, the thickness of the first coating layer may be about 2 nm, about 3 nm, about 4 nm, about 5 nm, about 6 nm, about 7 nm, about 8 nm, about 9 nm, or about 10 nm, or in any range defined by any of these values.

In some embodiments, the thickness of the second coating layer may be about 2 nm, about 3 nm, about 4 nm, about 5 nm, about 6 nm, about 7 nm, about 8 nm, about 9 nm, about 10 nm, about 11 nm, about 12 nm, about 13 nm, about 14 nm or about 15 nm, or in any range defined by any of these values.

The thickness of the first coating layer being 1-10 nm can avoid a possible unfavorable effect, caused by excessive thickness, on the kinetic performance of the material, and avoid the problem that the migration of the transition metal ions may not be hindered effectively in a case of an excessively thin coating layer.

When the thickness of the second coating layer is in the range of 2-15 nm, the second coating layer has a stable surface structure and small side reactions with the electrolyte, such that the interfacial side reactions can be effectively mitigated, thereby improving the high-temperature performance of the secondary battery.

The thickness of the coating layer is measured mainly by FIB, and the specific method can include the following steps: randomly selecting a single particle from the positive electrode active material powder to be tested, cutting a thin slice with a thickness of about 100 nm from the middle of the selected particle or near the middle, and performing TEM test on the thin slice to measure the thickness of the coating layer where the measurement is performed for 3 to 5 positions and an average value is taken.

In some embodiments, based on weight of the positive electrode active material, a percentage of element manganese is in the range of 10wt%-35wt%, optionally in the range of 15wt%-30wt%, and more optionally in the range of 17wt%-20wt%, and a percentage of element phosphorus is in the range of 12wt%-25wt%, and optionally in the range of 15wt%-20wt%, and optionally, a weight ratio of element manganese to element phosphorus being in the range of 0.90-1.25, and optionally 0.95-1.20.

In this application, under the condition that only the core of the positive electrode active material contains manganese, the percentage of manganese may correspond to the percentage of the core.

In some embodiments of this application, limiting the percentage of element manganese to be in the foregoing range can effectively avoid problems such as deterioration of the stability of the material structure and decrease in density that may be caused by an excessively high percentage of element manganese, thereby improving the performance of the secondary battery in terms of cycling, storage, compacted density, and so on, and avoid problems such as low voltage plateau that may be caused by an excessively low percentage of element manganese, thereby improving the energy density of the secondary battery.

In some embodiments of this application, limiting the percentage of element phosphorus to be in the foregoing range can effectively avoid the following cases: an excessively high percentage of element phosphorus may lead to a so strong covalency of P-O that the conductivity of small polarons is affected, thus affecting the electrical conductivity of the material; and an excessively low percentage of phosphorus may decrease the stability of the lattice structure of the core, pyrophosphate in the first coating layer, and/or phosphate in the second coating layer, thereby affecting the overall stability of the material.

The magnitude of the weight ratio of manganese to phosphorus has the following effects on the performance of the secondary battery: if the weight ratio is too large, it means that element manganese is too much, manganese dissolved increases, affecting the stability and gram capacity utilization of the positive electrode active material, which in turn affects the cycling performance and storage performance of the secondary battery; and if the weight ratio is too small, it means that element phosphorus is too much, a heterogeneous phase is prone to be formed, leading to a decrease in the discharge voltage plateau of the material, thereby reducing the energy density of the secondary battery.

The measurement of element manganese and element phosphorus can be performed by means of conventional technologies in the art. In particular, the following method is used to determine the percentages of element manganese and element phosphorus: dissolving the material in dilute hydrochloric acid (with a concentration of 10-30%), measuring the percentage of each element in the solution using ICP, and then performing measurement and conversion on the percentage of element manganese to obtain its weight percentage.

In some embodiments, a lattice change rate of the positive electrode active material having a core-shell structure before and after complete deintercalation or intercalation of lithium is below 4%, optionally below 3.8%, and more optionally from 2.0% to 3.8%.

The process of deintercalation or intercalation of lithium in lithium manganese phosphate (LiMnPO₄) is a two-phase reaction. The interfacial stress of the two phases is determined by the magnitude of the lattice change rate before and after deintercalation or intercalation of lithium, where a smaller lattice change rate indicates a lower interfacial stress and easier Li⁺ transfer. Therefore, a decrease in the lattice change rate of the core will be conducive to enhancing Li⁺ transport capacity, thereby improving the rate performance of the secondary battery. The positive electrode active material having a core-shell structure of some embodiments of this application can allow for a low lattice change rate of below 4% before and after deintercalation or intercalation of lithium, so the use of the positive electrode active material can improve the rate performance of the secondary battery. The lattice change rate can be measured by methods known in the art, for example, X-ray diffraction mapping (XRD).

In some embodiments, a Li/Mn anti-site defect concentration of the positive electrode active material having a core-shell structure is below 4%, optionally below 2.2%, and more optionally from 1.5% to 2.2%.

The Li/Mn anti-site defects of this application mean location exchange of Li⁺ and Mn²⁺ in the LiMnPO₄ lattice. Accordingly, the Li/Mn anti-site defect concentration refers to a percentage of Li⁺ interchanged with Mn²⁺ in the total amount of Li⁺. In this application, the Li/Mn anti-site defect concentration can be tested, for example, according to JIS K 0131-1996.

The positive electrode active material having a core-shell structure of some embodiments of this application can achieve the foregoing low Li/Mn anti-site defect concentration. Although the mechanism has not been understood yet, the inventors of this application speculate that because the Li⁺ and Mn²⁺ sites in the LiMnPO₄ lattice are interchanged and the transport channel of Li⁺ is a one-dimensional channel, Mn²⁺ is difficult to migrate in the channel of Li⁺ and thus hinders the transport of Li⁺. Therefore, due to the low Li/Mn anti-site defect concentration in the foregoing range, the positive electrode active material having a core-shell structure described in this application can more effectively prevent Mn²⁺ from hindering the transport of Li⁺ while increasing the gram capacity utilization and rate performance of the positive electrode active material.

In some embodiments, a compacted density under 3T of the positive electrode active material is above 2.2 g/cm³, and optionally above 2.2 g/cm³ and below 2.8 g/cm³. A higher compacted density indicates a large weight of the active material per unit volume. Therefore, increasing the compacted density is conducive to increasing the volumetric energy density of the cell. The compacted density can be measured according to GB/T 24533-2009.

In some embodiment, a surface oxygen valence of the positive electrode active material is below -1.90, and optionally from 1.90 to -1.98. The stable valence of oxygen is originally -2. The valence closer to -2 indicates a stronger electron accepting ability, in other words, higher oxidability. Typically, the surface valence of oxygen is below -1.7. In this application, limiting the surface oxygen valence of the positive electrode active material to be in the foregoing range can mitigate the interfacial side reactions between the positive electrode material and the electrolyte, thereby improving the performance of the cell in terms of cycling, high-temperature storage, gas production, and the like.

The surface oxygen valence can be measured by a method known in the art, such as electron energy loss spectroscopy (EELS).

This application further provides a preparation method of positive electrode active material including the following steps:
Step of providing a core material: chemical formula of the core is Li₁₊ₓMn_{1-y}A_{y}P_{1-z}R_{z}O₄, where x is any value in the range of -0.100 to 0.100, y is any value in the range of 0.001 to 0.500, z is any value in the range of 0.001 to 0.100, A is one or more elements selected from Zn, Al, Na, K, Mg, Mo, W, Ti, V, Zr, Fe, Ni, Co, Ga, Sn, Sb, Nb, and Ge, and optionally one or more elements from Fe, Ti, V, Ni, Co, and Mg, R is one or more elements selected from B, Si, N, and S, and optionally R is one element selected from B, Si, N, and S.
Coating step: providing suspensions for forming LiₐMP₂O₇ and/or M_{b}(P₂O₇)_{c}, a suspension for forming XPO₄, and a solution for forming a doped carbon layer; adding the core material to the suspensions and mixing them; and sintering the resulting mixture to obtain a positive electrode active material, where 0≤a≤2, 1≤b≤4, 1≤c≤6, and the values of a, b, and c satisfy the following condition that the crystalline pyrophosphate LiₐMP₂O₇ or M_{b}(P₂O₇)_{c} is electrically neutral, and each M is independently one or more elements selected from Fe, Ni, Mg, Co, Cu, Zn, Ti, Ag, Zr, Nb, or Al, and X is one or more elements selected from Li, Fe, Ni, Mg, Co, Cu, Zn, Ti, Ag, Zr, Nb, or Al.

The positive electrode active material has a core-shell structure including the core and a shell enveloping the core, the shell including a first coating layer enveloping the core, a second coating layer enveloping the first coating layer, and a third coating layer enveloping the second coating layer; where the first coating layer includes a crystalline pyrophosphate LiₐMP₂O₇ and/or M_{b}(P₂O₇)_{c}, the second coating layer includes a crystalline phosphate XPO₄, and the third coating layer is carbon.

In some embodiments, the step of providing a core material includes the following steps:
step (1): mixing and stirring a manganese source, a dopant of element A, and an acid in a container to obtain manganese salt particles doped with element A; and
step (2): mixing the manganese salt particles doped with element A with a lithium source, a phosphorus source, and a dopant of element R in a solvent to obtain a slurry, and sintering the slurry under protection of inert gas atmosphere to obtain a core doped with element A and element R.

The material source is not particularly limited in the preparation method in this application, and the source of an element may include one or more of elementary substance, sulfate, halide, nitrate, organic acid salt, oxide, and hydroxide of the element, provided that the source can achieve the objectives of the preparation method in this application.

In some embodiments, the dopant of element A is one or more elements selected from the respective elemental form, carbonate, sulfate, chloride, nitrate, organic acid salt, oxide, and hydroxide of one or more of elements Zn, Al, Na, K, Mg, Mo, W, Ti, V, Zr, Fe, Ni, Co, Ga, Sn, Sb, Nb, and Ge.

In some embodiments, the dopant of element R is one or more elements selected from the respective inorganic acid, sub-acid, organic acid, sulfate, chloride, nitrate, organic acid salt, oxide, and hydroxide of one or more of elements B, Si, N, and S.

In this application, the manganese source is a manganese-containing substance known in the art that can be used for preparing lithium manganese phosphate. For example, the manganese source may be one or more selected from elemental manganese, manganese dioxide, manganese phosphate, manganese oxalate, and manganese carbonate.

In this application, the acid may be selected from one or more of organic acids such as hydrochloric acid, sulfuric acid, nitric acid, phosphoric acid, silicic acid, and metasilicic acid, and organic acids such as oxalic acid. In some embodiments, the acid is a dilute organic acid with a concentration below 60wt%.

In this application, the lithium source may be a lithium-containing substance known in the art that can be used to prepare lithium manganese phosphate. For example, the lithium source is selected from one or more of lithium carbonate, lithium hydroxide, lithium phosphate, and lithium dihydrogen phosphate.

In this application, the phosphorus source may be a phosphorus-containing substance known in the art that can be used to prepare lithium manganese phosphate. For example, the phosphorus source is one or more selected from diammonium phosphate, ammonium dihydrogen phosphate, ammonium phosphate, and phosphoric acid.

In some optional embodiments, after the manganese source, the dopant of element A, and the acid react in a solvent to obtain a suspension of manganese salt doped with element A, the suspension is filtered, dried, and sanded to obtain element A-doped manganese salt particles having a particle size of 50-200 nm.

In some optional embodiments, the slurry in step (2) is dried to obtain a powder, and then the powder is sintered to obtain a core doped with element A and element R.

In some embodiments, the mixing in step (1) is performed at a temperature of 20-120°C, optionally 40-120°C; and/or the stirring in step (1) is performed at 400-700 rpm for 1 hour-9 hours, optionally 3 hours-7 hours.

Optionally, the reaction temperature in step (1) may be about 30°C, about 50°C, about 60°C, about 70°C, about 80°C, about 90°C, about 100°C, about 110°C or about 120°C; the stirring in step (1) may be performed for about 2 hours, about 3 hours, about 4 hours, about 5 hours, about 6 hours, about 7 hours, about 8 hours, or about 9 hours; and optionally, the reaction temperature and the stirring time in step (1) may be in any range defined by any of these values.

In some embodiments, the mixing in step (2) is performed at a temperature of 20-120°C, optionally 40-120°C for about 1 hour-12 hours. Optionally, the reaction temperature in step (2) may be about 30°C, about 50°C, about 60°C, about 70°C, about 80°C, about 90°C, about 100°C, about 110°C or about 120°C; the mixing in step (2) may be performed for about 2 hours, about 3 hours, about 4 hours, about 5 hours, about 6 hours, about 7 hours, about 8 hours, 9 hours, 10 hours, 11 hours, or about 12 hours; and optionally, the reaction temperature and the mixing time in step (2) may be in any range defined by any of these values.

When the temperature and time during the preparation of the core particles are in the foregoing ranges, the cores obtained from the preparation and the positive electrode active material made therefrom have fewer lattice defects, which is conducive to suppressing manganese dissolution and reducing interfacial side reactions between the positive electrode active material and the electrolyte, thereby improving the cycling performance and safety performance of the secondary battery.

In some embodiments, optionally, in the process of preparing the dilute manganese acid particles doped with element A and element R, the pH of the solution is controlled to be 3.5-6; optionally, the PH of the solution is controlled to be 4-6; and more optionally, the PH of the solution is controlled to be 4-5. It should be noted that the pH of the obtained mixture may be adjusted in this application by a method commonly used in the art, for example, the addition of an acid or alkali.

In some embodiments, optionally, a molar ratio of the manganese salt particles, the lithium source, and the phosphorus source in step (2) is 1:0.5-2.1:0.5-2.1, and more optionally, a molar ratio of the manganese salt particles doped with element A, the lithium source, and phosphorus source is about 1:1:1.

In some embodiments, optionally, the sintering conditions in the process of preparing lithium manganese phosphate doped with element A and element R are as follows: the sintering is performed in inert gas or a mixture of inert gas and hydrogen at 600-950°C for 4 hours-10 hours; optionally, the sintering may be performed at about 650°C, about 700°C, about 750°C, about 800°C, about 850°C, or about 900°C for about 2 hours, about 3 hours, about 4 hours, about 5 hours, about 6 hours, about 7 hours, about 8 hours, about 9 hours, or about 10 hours; and optionally, the sintering temperature and sintering time may be in any range defined by any of these values. In the process of preparing lithium manganese phosphate doped with element A and element R, if the sintering temperature is too low and the sintering time is too short, the crystallinity of the core of the material will be low, affecting the overall performance; and if the sintering temperature is too high, heterogeneous phases are prone to appear in the core of the material, affecting the overall performance; and if the sintering time is too long, the particles of the core of the material will grow large, affecting the gram capacity, the compacted density, the rate performance, and so on.

In some optional embodiments, optionally, the protective atmosphere is a mixture of 70vol%-90vol% nitrogen and 10vol%-30vol% hydrogen.

In some embodiments, the coating step includes:
first coating step: dissolving a source of element M, a phosphorus source, an acid, and an optional lithium source in a solvent to obtain a first coating layer suspension; and thoroughly mixing the core obtained in the core step with the first coating layer suspension obtained in the first coating step, followed by drying and sintering, to obtain the material coated with the first coating layer;
second coating step: dissolving a source of element X, a phosphorus source, and an acid in a solvent to obtain a second coating layer suspension; and thoroughly mixing the material coated with the first coating layer obtained in the first coating step with the second coating layer suspension obtained in the second coating step, followed by drying and sintering, to obtain the material coated with two coating layers; and
third coating step: dissolving fully a carbon source and a source of doping element in a solvent to obtain a third coating layer solution; and adding the material coated with two coating layers obtained in the second coating step to the third coating layer solution to mix them to uniformity, followed by drying and sintering, to obtain the material coated with three coating layers, that is, the positive electrode active material.

In some embodiments, the source of element M is one or more elements selected from the respective elemental form, carbonate, sulfate, chloride, nitrate, organic acid salt, oxide, and hydroxide of one or more of elements Fe, Ni, Mg, Co, Cu, Zn, Ti, Ag, Zr, Nb, or Al.

In some embodiments, the source of element X is one or more elements selected from the respective elemental form, carbonate, sulfate, chloride, nitrate, organic acid salt, oxide, and hydroxide of one or more of elements Li, Fe, Ni, Mg, Co, Cu, Zn, Ti, Ag, Zr, Nb, or Al.

The amounts of sources of elements A, R, M, and X, carbon source, and source of doping element added depend on a target doping amount, and the ratio of amounts of the lithium source, manganese source, and phosphorus source conforms to the stoichiometric ratio.

For example, the carbon source is one or more selected from a group consisting of starch, sucrose, glucose, cellulose, polyvinyl alcohol, polyethylene glycol, sodium carboxymethyl cellulose, citric acid, lactic acid, and succinic acid. The source of doping element is one or more selected from a group consisting of source of element nitrogen, source of element phosphorus, source of element sulfur, source of element boron, and source of element fluorine. The source of element nitrogen is any one or more selected from a group consisting of ethylenediamine, melamine, benzylamine, acetonitrile, ammoniated sucrose, pyrrole, aniline, acrylonitrile, polyimide acid, and nitrogen-containing aliphatic heterocyclic compound. The source of element phosphorus is any one or more selected from a group consisting of elemental phosphorus, phosphorus pentoxide, ammonium dihydrogen phosphate, ammonium phosphate, phosphoric acid, hypophosphorous acid, phosphorous acid, metaphosphoric acid, pyrophosphoric acid, polyphosphoric acid, phytic acid, phosphorus trichloride, phosphorus pentachloride, phosphorus tribromide, triphenoxyphosphine, triphenylphosphine, and tributylphosphine. The source of element sulfur is any one or more selected from a group consisting of selected from sulfur powder, sulfuric acid, sulfurous acid, ammonium sulfate, thiophene, thiazole, thiourea, dimethyl sulfoxide, thioacetamide, and thiol. The source of element boron is any one or more selected from a group consisting of elemental boron, boric acid, diboron trioxide, boron nitride, trimethyl borate, sodium tetraphenylborate, and boron trichloride. The source of element fluorine is any one or more selected from a group consisting of hydrofluoric acid, ammonium fluoride, and fluorine-containing organic substance. The fluorine-containing organic substance is selected from any one of fluorine-containing alkane, fluorine-containing olefin, fluorine-containing aromatic hydrocarbon, and fluorine-containing carboxylic acid. Selecting the source of each doping element, the doping element can have a more uniform distribution, thereby improving the performance of the material.

The fluorine-containing organic substance may be further any one or more selected from a group consisting of difluoromethane, difluoroethane, polytrifluoroethylene, polytetrafluoroethylene, polyvinylidene fluoride, polyvinyl fluoride, and the like.

In some embodiments, in the first coating step, the pH of the solution with the source of element M, phosphorus source, acid, and optional lithium source dissolved is controlled to be 3.5-6.5. The solution is stirred and reacted for 1 hour-5 hours. Then, the solution is heated to 50-120°C and kept at that temperature for 2 hours-10 hours, and/or sintered at 650-800°C for 2 hours-6 hours.

Optionally, in the first coating step, full reaction is carried out. Optionally, in the first coating step, the reaction is carried out for about 1.5 hours, about 2 hours, about 3 hours, about 4 hours, about 4.5 hours, or about 5 hours. Optionally, in the first coating step, the reaction time of the reaction may be in any range defined by any of these values.

Optionally, in the first coating step, the pH of the solution is controlled to be 4-6. Optionally, in the first coating step, the solution is heated to about 55°C, about 60°C, about 70°C, about 80°C, about 90°C, about 100°C, about 110°C, or about 120°C, and kept at that temperature for about 2 hours, about 3 hours, about 4 hours, about 5 hours, about 6 hours, about 7 hours, about 8 hours, about 9 hours, or about 10 hours. Optionally, in the first coating step, the heated-to temperature and the keeping time thereof may be in any range defined by any of these values.

Optionally, in the first coating step, the sintering may be carried at about 650°C, about 700°C, about 750°C, or about 800°C for about 2 hours, about 3 hours, about 4 hours, about 5 hours, or about 6 hours. Optionally, the sintering temperature and sintering time may be in any range defined by any of these values.

In the first coating step, controlling the sintering temperature and time to be in the foregoing ranges can avoid the following cases. In the first coating step, when the sintering temperature is too low and the sintering time is too short, it will result in low crystallinity and a higher proportion of amorphous substances in the first coating layer. This results in a decrease in the effect of suppressing metal dissolution, thereby affecting the cycling performance and high-temperature storage performance of the secondary battery. However, when the sintering temperature is too high, the first coating layer experiences a heterogeneous phase. This also affects the effect of the first coating layer in suppressing metal dissolution, thereby affecting the cycling and high-temperature storage performance and the like of the secondary battery. When the sintering time is too long, the thickness of the first coating layer is increased, affecting the migration of Li⁺, thereby affecting the gram capacity utilization, rate performance, and the like of the material.

In some embodiments, in the second coating step, after the source of element X, phosphorus source, and acid are dissolved in the solution, the solution is stirred and reacted for 1 hour-10 hours, heated to 60-150°C and kept at that temperature for 2 hours-10 hours, and/or sintered at 500-700°C for 6 hours-10 hours.

Optionally, in the second coating step, full reaction is carried out. Optionally, in the second coating step, the reaction is carried out for about 1.5 hours, about 2 hours, about 3 hours, about 4 hours, about 4.5 hours, about 5 hours, about 6 hours, about 7 hours, about 8 hours, about 9 hours, or about 10 hours. Optionally, in the second coating step, the reaction time of the reaction may be in any range defined by any of these values.

Optionally, in the second coating step, the solution is heated to about 65°C, about 70°C, about 80°C, about 90°C, about 100°C, about 110°C, about 120°C, about 130°C, about 140°C, or about 150°C, and kept at that temperature for about 2 hours, about 3 hours, about 4 hours, about 5 hours, about 6 hours, about 7 hours, about 8 hours, about 9 hours, or about 10 hours. Optionally, in the second coating step, the heated-to temperature and the keeping time thereof may be in any range defined by any of these values.

In the step of providing a core material, the first coating step, and the second coating step, prior to sintering, that is, during the preparation of the core material (step (1) and step (2)), first coating layer suspension, and second coating layer suspension in which chemical reactions take place, selecting appropriate reaction temperatures and reaction times as described above can avoid the following cases. When the reaction temperature is too low, the reaction cannot take place or the reaction speed is low. When the temperature is too high, the product decomposes or a heterogeneous phase is formed. When the reaction time is too long, the product particle size is large, which may increase the time and difficulty of subsequent processes. When the reaction time is too short, the reaction is incomplete and fewer products are obtained.

Optionally, in the second coating step, the sintering may be carried out at about 550°C, about 600°C, or about 700°C for about 6 hours, about 7 hours, about 8 hours, about 9 hours, or about 10 hours. Optionally, the sintering temperature and sintering time may be in any range defined by any of these values.

In the second coating step, controlling the sintering temperature and time to be in the foregoing ranges can avoid the following cases. When the sintering temperature is too low and the sintering time is too short in the second coating step, it will result in low crystallinity and a higher proportion of amorphous phase in the second coating layer. This results in a decrease in the performance of reducing reaction activity on the material surface, thereby affecting the cycling performance, high-temperature storage performance, and the like of the secondary battery. However, when the sintering temperature is too high, the second coating layer experiences a heterogeneous phase. This also affects the effect of the second coating layer in reducing reaction activity on the material surface, thereby affecting the cycling and high-temperature storage performance and the like of the secondary battery. When the sintering time is too long, the thickness of the second coating layer is increased, affecting the voltage plateau of the material, thereby resulting in a decrease in the energy density of the material and the like.

In some embodiments, in the third coating step, the sintering is carried out at 700-800°C for 6 hours-10 hours. Optionally, in the third coating step, the sintering may be carried out at about 700°C, about 750°C, or about 800°C for about 6 hours, about 7 hours, about 8 hours, about 9 hours, or about 10 hours. Optionally, the sintering temperature and sintering time may be in any range defined by any of these values.

In the third coating step, controlling the sintering temperature and time to be in the foregoing ranges can avoid the following cases. When the sintering temperature in the third coating step is too low, it will lead to a decrease in the graphitization degree of the third coating layer, affecting the electrical conductivity of the third coating layer and thus affecting the gram capacity utilization of the material. When the sintering temperature is too high, it will lead to an excessively high graphitization degree of the third coating layer, affecting the Li⁺ transport, thereby affecting the gram capacity utilization and the like of the material. When the sintering time is too short, it will result in an excessively thin coating layer, affecting the electrical conductivity of the coating layer and thereby affecting the gram capacity utilization of the material. When the sintering time is too long, it will result in an excessively thick coating layer, thereby affecting the compacted density and the like of the material.

In the first coating step, the second coating step, and the third coating step described above, the drying is all carried out at a drying temperature of 100°C to 200°C, optionally at 110°C to 190°C, more optionally at 120°C to 180°C, further more optionally 120°C to 170°C, and most optionally 120°C to 160°C, with a drying time of 3 hours-9 hours, optionally 4 hours-8 hours, more optionally 5 hours-7 hours, and most optionally about 6 hours.

With the positive electrode active material prepared by using the method for preparing the positive electrode active material described in this application, the secondary battery prepared therefrom exhibits a smaller dissolving-out amount of Mn and element doped at Mn site after cycling, as well as improved high-temperature stability, high-temperature cycle performance, and rate capability. In addition, the raw materials are widely available and are of low cost, and the process is simple, which is conducive to industrial-scale implementation.

### [Positive electrode plate]

An embodiment of this application further provides a positive electrode plate including a positive electrode current collector and a positive electrode film layer provided on at least one surface of the positive electrode current collector, where the positive electrode film layer includes any one of the foregoing positive electrode active material; and optionally, based on total weight of the positive electrode film layer, a percentage of the positive electrode active material in the positive electrode film layer is above 10wt%, and further optionally from 95wt% to 99.5wt%.

For example, the positive electrode current collector has two opposite surfaces in its thickness direction, and the positive electrode film layer is disposed on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, a matrix of polypropylene (PP), polyethylene terephthalate (PET), polybutylene terephthalate (PBT), polystyrene (PS), or polyethylene (PE)).

In some embodiments, the positive electrode active material may alternatively include a well-known positive electrode active material used for batteries in the art. For example, the positive electrode active material may alternatively include at least one of the following materials: olivine-structured lithium-containing phosphate, lithium transition metal oxide, and respective modified compounds thereof. However, this application is not limited to such materials, and may alternatively use other conventional materials that can be used as positive electrode active materials for batteries. One type of these positive electrode active materials may be used alone, or two or more of them may be used in combination. Examples of the lithium transition metal oxide may include but are not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), and LiNi_{0.8}Co_{0.1}Mn_{0.1}O₂ (NCM811 for short)), lithium nickel cobalt aluminum oxide (for example, LiNi_{0.85}Co_{0.15}Al_{0.05}O₂), and modified compounds thereof. Examples of the olivine-structured lithium-containing phosphate may include but are not limited to at least one of lithium iron phosphate (for example, LiFePO₄ (LFP for short)), composite material of lithium iron phosphate and carbon, lithium manganese phosphate (for example, LiMnPO₄), composite material of lithium manganese phosphate and carbon, lithium manganese iron phosphate, or composite material of lithium manganese iron phosphate and carbon.

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofibers.

In some embodiments, the positive electrode plate may be prepared in the following manner: the constituents used for preparing the positive electrode plate, for example, the positive electrode active material, the conductive agent, the binder, and any other constituent, are dissolved in a solvent (for example, N-methylpyrrolidone) to form a positive electrode slurry; and the positive electrode slurry is applied onto the positive electrode current collector, and processes such as drying and cold pressing are performed to obtain the positive electrode plate.

### [Negative electrode plate]

The negative electrode plate includes a negative electrode current collector and a negative electrode film layer disposed on at least one surface of the negative electrode current collector, where the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, for the metal foil, a copper foil may be used. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, a matrix of polypropylene (PP), polyethylene terephthalate (PET), polybutylene terephthalate (PBT), polystyrene (PS), or polyethylene (PE)).

In some embodiments, the negative electrode active material may be a well-known negative electrode active material used for a battery in the art. For example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, or tin alloy. However, this application is not limited to these materials, and may alternatively use other conventional materials that can be used as negative electrode active materials for batteries. One of these negative electrode active materials may be used alone, or two or more of them may be used in combination.

In some embodiments, the negative electrode film layer further optionally includes a binder. For example, the binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. For example, the conductive agent may be selected from at least one of superconducting carbon, acetylene black, carbon black, Ketjen black, carbon dots, carbon nanotubes, graphene, and carbon nanofibers.

In some embodiments, the negative electrode film layer further optionally includes other additives such as a thickener (for example, sodium carboxymethyl cellulose (CMC-Na)).

In some embodiments, the negative electrode plate may be prepared in the following manner: the compositions used for preparing the negative electrode plate, for example, the negative electrode active material, the conductive agent, the binder, and any other compositions, are dispersed in a solvent (for example, deionized water) to form a negative electrode slurry; and the negative electrode slurry is applied onto the negative electrode current collector, followed by processes such as drying and cold pressing to obtain the negative electrode plate.

### [Electrolyte]

The electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, the electrolyte is liquid and includes an electrolytic salt and a solvent.

In some embodiments, the electrolyte salt may be selected from at least one of lithium hexafluorophosphate, lithium tetrafluoroborate, lithium perchlorate, lithium hexafluoroborate, lithium bis(fluorosulfonyl)imide, lithium bis-trifluoromethanesulfonimide, lithium trifluoromethanesulfonat, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the electrolyte further optionally includes an additive. For example, the additive may include a negative electrode film-forming additive or a positive electrode film-forming additive, or may include an additive capable of improving some performance of the battery, for example, an additive for improving overcharge performance of the battery, or an additive for improving high-temperature or low-temperature performance of the battery.

### [Separator]

In some embodiments, the secondary battery further includes a separator. The separator is not limited to any particular type in this application, and may be any well-known porous separator with good chemical stability and mechanical stability.

In some embodiments, a material of the separator may be selected from at least one of glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

In some embodiments, the secondary battery may include an outer package. The outer package is used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic. As the plastic, polypropylene, polybutylene terephthalate, polybutylene succinate, and the like may be listed.

This application does not impose any special limitations on a shape of the secondary battery, and the secondary battery may be cylindrical, rectangular, or of any other shapes. For example, FIG. 2 shows a secondary battery 5 of a rectangular structure as an example.

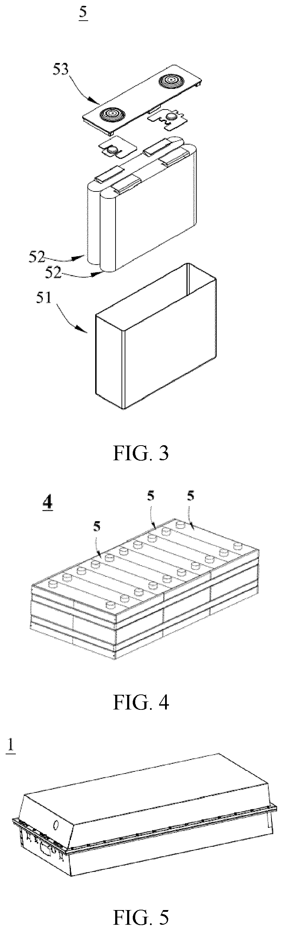

In some embodiments, referring to FIG. 3, the outer package may include a housing 51 and a cover plate 53. The housing 51 may include a base plate and side plates connected onto the base plate, and the base plate and the side plates enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. There may be one or more electrode assemblies 52 in the secondary battery 5, and persons skilled in the art may make choices according to actual requirements.

In some embodiments, the secondary battery may be used to assemble a battery module, and the battery module may include one or more secondary batteries. The specific quantity may be chosen by persons skilled in the art based on use and capacity of the battery module.

FIG. 4 shows a battery module 4 as an example. Referring to FIG. 4, in the battery module 4, a plurality of secondary batteries 5 may be sequentially arranged along a length direction of the battery module 4. Certainly, the batteries may alternatively be arranged in any other manners. Further, the plurality of secondary batteries 5 may be fastened by using fasteners.

Optionally, the battery module 4 may further include a housing with an accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

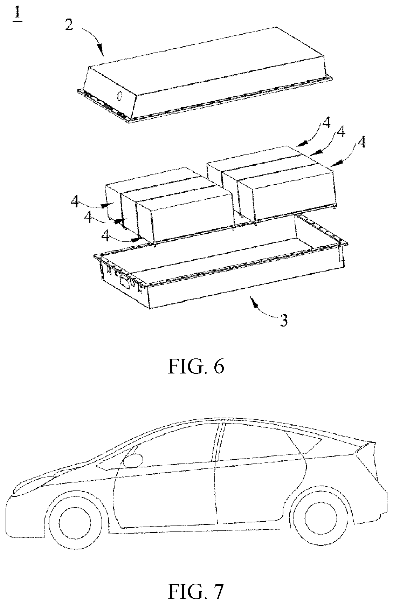

FIG. 5 and FIG. 6 show a battery pack 1 as an example. Refer to FIG. 5 and FIG. 6. The battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery module 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the electric apparatus based on requirements for using the electric apparatus.

FIG. 7 shows an electric apparatus as an example. The electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

### Examples

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated. The amounts of components in the examples of the present invention are all measured by mass without water of crystallization, unless otherwise specified.

The raw materials used in the examples of this application are sourced as follows:

| Name | Chemical formula | Manufacturer | Amount |
|---|---|---|---|
| Manganese carbonate | MnCO₃ | Shandong Xiya Reagent Co., Ltd. | 1 Kg |
| Lithium carbonate | Li₂CO₃ | Shandong Xiya Reagent Co., Ltd. | 1 Kg |
| Magnesium carbonate | MgCO₃ | Shandong Xiya Reagent Co., Ltd. | 1 Kg |
| Zinc carbonate | ZnCO₃ | Wuhan Xinru Chemical Co., Ltd. | 25 Kg |
| Ferrous carbonate | FeCO₃ | Xi'an Lanzhiguang Fine Material Co., Ltd. | 1 Kg |
| Nickel sulfate | NiCO₃ | Shandong Xiya Reagent Co., Ltd. | 1 Kg |
| Titanium sulfate | Ti(SO₄)₂ | Shandong Xiya Reagent Co., Ltd. | 1 Kg |
| Cobalt sulfate | CoSO₄ | Xiamen Simagchem Co., Ltd. | 500 g |
| Vanadium dichloride | VCl₂ | Shanghai Jinjinle Industry Co., Ltd. | 1 Kg |
| Oxalic acid dihydrate | C₂H₂O₄.2(H₂O) | Shanghai Jinjinle Industry Co., Ltd. | 1 Kg |
| Ammonium dihydrogen phosphate | NH₄H₂PO₄ | Shanghai Chengshao Biotechnology Co., Ltd. | 500 g |
| Sucrose | C₁₂H₂₂O₁₁ | Shanghai Yuanye Biotechnology Co., Ltd. | 100 g |
| Dilute sulfuric acid | H₂SO₄ | Shenzhen Haisian Biotechnology Co., Ltd. | Mass fraction: 60% |
| Dilute nitric acid | HNO₃ | Anhui Lingtian Fine Chemical Co., Ltd. | Mass fraction: 60% |
| Metasilicic acid | H₂SiO₃ | Shanghai Yuanye Biotechnology Co., Ltd. | 100 g, mass fraction: 99.8% |
| Phosphate | H₃PO₄ | Shanghai Aladdin Biochemical Technology Co., Ltd. | Mass fraction: 85% |
| Ethylenediamine | C₂H₈N₂ | Shanghai Aladdin Biochemical Technology Co., Ltd. | 500 g |
| Hydrofluoric acid | HF | Shanghai Aladdin Biochemical Technology Co., Ltd. | 500 mL, mass fraction: 40% |

### I. Preparation of battery

### Example 1

### Step 1: Preparation of positive electrode active material

### Step S1: Preparation of Fe, Co, V, and S co-doped manganese oxalate

689.6 g of manganese carbonate, 455.27 g of ferrous carbonate, 4.65 g of cobalt sulfate, and 4.87 g of vanadium dichloride were added into a mixer and mixed thoroughly for 6 h. The resulting mixture was transferred into a reactor, 5 L of deionized water and 1260.6 g of oxalic acid dihydrate were added into the reactor, the reactor was heated to 80°C, and the materials were stirred well for 6 h at 500 rpm to mix them to uniformity until the reaction was terminated without bubbles to obtain a Fe, Co, and V co-doped manganese oxalate suspension. The suspension was filtered, dried at 120°C, and then sanded to obtain manganese oxalate particles with a particle size of 100 nm.

### Step S2: Preparation of core Li_{0.997}Mn_{0.60}Fe_{0.393}V_{0.004}Co_{0.003}P_{0.997}S_{0.003}O₄

1793.1 g of manganese oxalate prepared in (1), 368.3 g of lithium carbonate, 1146.6 g of ammonium dihydrogen phosphate, and 4.9 g of dilute sulfuric acid were added into 20 L of deionized water, the mixture was stirred thoroughly, mixed to uniformity and reacted at 80°C for 10 h to obtain a slurry. The slurry was transferred to a spray drying device for spray drying and granulation at 250°C to obtain powder. The powder was sintered in a roller kiln for 4 h at 700°C in a protective atmosphere (90% nitrogen and 10% hydrogen) to obtain the core material.

### Step S3: Preparation of first coating layer suspension

Preparation of Li₂FeP₂O₇ solution: 7.4 g of lithium carbonate, 11.6 g of ferrous carbonate, 23.0 g of ammonium dihydrogen phosphate, and 12.6 g of oxalic acid dihydrate were dissolved in 500 mL of deionized water, with a pH value controlled to be 5; the mixture was stirred and reacted at room temperature for 2 h to obtain a solution; and then the solution was heated to 80°C and kept at this temperature for 4 h to obtain a first coating layer suspension.

### Step S4: Application of first coating layer

1571.9 g of the doped core material lithium manganese phosphate obtained in step S2 was added to the first coating layer suspension (having a coating substance of 15.7 g) obtained in step S3, and the substances were fully mixed and stirred for 6 h. After mixed to uniformity, the mixture was transferred to an oven and dried there at 120°C for 6 h, and then sintered in a protective atmosphere (90% nitrogen and 10% hydrogen) at 650°C for 6 h to obtain a pyrophosphate coated material.

### Step S5: Preparation of second coating layer suspension

3.7 g of lithium carbonate, 11.6 g of ferrous carbonate, 11.5 g of ammonium dihydrogen phosphate, and 12.6 g of oxalic acid dihydrate were dissolved in 1500 mL of deionized water; the mixture was stirred and reacted for 6 h to obtain a solution; and then the solution was heated to 120°C and kept at this temperature for 6 h to obtain a second coating layer suspension.

### Step S6: Application of second coating layer

1586.8 g of the pyrophosphate coated material obtained in step S4 was added to the second coating layer suspension (having a coating substance of 47.1 g) obtained in step S5, and the substances were fully mixed and stirred for 6 h. After mixed to uniformity, the mixture was transferred to an oven and dried there at 120°C for 6 h, and then sintered in a protective atmosphere (90% nitrogen and 10% hydrogen) at 700°C for 8 h to obtain a material with two coating layers.

### Step S7: Preparation of third coating layer aqueous solution

37.3 g of sucrose and 3.17 g of ethylenediamine were dissolved in 500 g of deionized water, and then the substances were stirred for complete dissolution to obtain an aqueous solution of sucrose.

### Step S8: Application of third coating layer

1633.9 g of the material with two coating layers obtained in step S6 was added into the sucrose solution obtained in step S7, and the substances were stirred and mixed for 6 h. After mixed to uniformity, the mixture was transferred to an oven and dried there at 150°C for 6 h, and then sintered in a protective atmosphere (90% nitrogen and 10% hydrogen) at 700°C for 10 h to obtain a material with three coating layers.

### Step 2: Preparation of positive electrode plate

The prepared positive electrode active material with three coating layers, a conductive agent acetylene black, and a binder polyvinylidene fluoride (PVDF) were added at a weight ratio of 97.0:1.2:1.8 to N-methylpyrrolidone (NMP), and stirred and mixed to uniformity to obtain a positive electrode slurry. The positive electrode slurry was applied onto an aluminum foil at 0.280 g/1540.25 mm², followed by drying, cold pressing, and slitting, to obtain a positive electrode plate.

### Step 3: Preparation of negative electrode plate

A negative electrode active substance artificial graphite, hard carbon, a conductive agent acetylene black, a binder styrene-butadiene rubber (SBR), and a thickener sodium carboxymethyl cellulose (CMC) were dissolved at a weight ratio of 90:5:2:2:1 in a solvent deionized water, and stirred and mixed to uniformity to obtain a negative electrode slurry. The negative electrode slurry was uniformly applied onto a negative electrode current collector copper foil at 0.117 g/1540.25 mm², followed by drying, cold pressing, and slitting, to obtain a negative electrode plate.

### Step 4: Preparation of electrolyte

In an argon atmosphere glove box (H₂O<0.1 ppm, and O₂<0.1 ppm), organic solvents ethylene carbonate (EC) and methyl ethyl carbonate (EMC) were mixed to uniformity at a volume ratio of 3:7, and 12.5wt% (based on the weight of ethylene carbonate and methyl ethyl carbonate) LiPF₆ was added to dissolve in the organic solvents, and the solution was stirred to obtain a uniform electrolyte.

### Step 5: Preparation of separator

A commercially available PP-PE copolymer microporous film (from Advanced Electronic Technology Co., Ltd. model 20) with a thickness of 20 µm and an average pore size of 80 nm was used.

### Step 6 Preparation of full battery

The positive electrode plate, separator, and negative electrode plate obtained above were stacked in order, so that the separator was placed between the positive and negative electrodes for separation, and winding was performed to obtain a jelly roll. The jelly roll was placed in an outer package, the electrolyte was injected, and the outer package was sealed to obtain a full battery (also referred to as "full cell" hereinafter).

### [Preparation of button battery]

The prepared positive electrode active material, polyvinylidene fluoride (PVDF), and acetylene black were added at a weight ratio of 90:5:5 to N-methylpyrrolidone (NMP), and stirred in a drying room to obtain a slurry. The slurry was applied onto an aluminum foil, followed by drying and cold pressing, to obtain a positive electrode plate. The application amount was 0.2 g/cm² and the compacted density was 2.0 g/cm³.

A lithium sheet used as the negative electrode, a solution containing ethylene carbonate (EC), diethyl carbonate (DEC), and dimethyl carbonate (DMC) at a volume ratio of 1:1:1 and 1 mol/L LiPF₆ used as the electrolyte, and the prepared positive electrode plate were assembled together in a button cell box to form a button battery (also referred to as "button cell" hereafter).

### Examples 2 to 27 and Comparative Examples 1 to 19

The positive electrode active materials and batteries in Examples 2 to 27 and Comparative Examples 1 to 19 were prepared in a similar manner to that for Example 1. Tables 1-6 give the differences in the preparation of the positive electrode active materials, where no first layer was applied in Comparative Examples 1, 2, 4 to 10, and 12, so there were no steps S3 and S4; and no second layer was applied in Comparative Examples 1 to 11, so there were no steps S5 and S6.

Note: In all examples and comparative examples of this application, if not specified, the first coating layer substance and/or the second coating layer substance used are by default crystalline.

**Table 1 Preparation material of core**

| No. | Core | Raw material used in step S1 | Raw material used in step S2 |
|---|---|---|---|
| Comparative Example 1 and Comparative Example 13 | LiMnPO₄ | Manganese carbonate, 1149.3 g; water, 5 L; oxalic acid dihydrate, 1260.6 g; | Manganese oxalate dihydrate (in terms of C₂O₄Mn•2H₂O) obtained in step S1, 1789.6 g; lithium carbonate, 369.4 g; ammonium dihydrogen phosphate, 1150.1 g; water, 20 L; |
| Comparative Example 2 | LiMn_{0.60}Fe_{0.40}PO₄ | Manganese carbonate, 689.6 g; ferrous carbonate, 463.4 g; water, 5 L; oxalic acid dihydrate, 1260.6 g; | Ferromanganese oxalate dihydrate (in terms of C₂O₄Mn_{0.60}Fe_{0.40}•2H₂O) obtained in step S1, 1793.2 g; lithium carbonate, 369.4 g; ammonium dihydrogen phosphate, 1150.1 g; water, 20 L; |
| Comparative Example 3 | LiMn_{0.80}Fe_{0.20}PO₄ | Manganese carbonate, 919.4 g; ferrous carbonate, 231.7 g; water, 5 L; oxalic acid dihydrate, 1260.6 g; | Ferromanganese oxalate dihydrate (in terms of C₂O₄Mn_{0.80}Fe₀₂₀•2H₂O) obtained in step S1, 1791.4 g; lithium carbonate, 369.4 g; ammonium dihydrogen phosphate, 1150.1 g; water, 20 L; |
| Comparative Example 4 | LiMn_{0.70}Fe_{0.295}V_{0.005}PO₄ | Manganese carbonate, 804.5 g; ferrous carbonate, 341.8 g; vanadium dichloride, 6.1 g; water, 5 L; oxalic acid dihydrate, 1260.6 g; | Ferromanganese vanadium oxalate dihydrate (in terms of C₂O₄Mn_{0.70}Fe_{0.295}V_{0.005}•2H₂O) obtained in step S1, 1792.0 g; lithium carbonate, 369.4 g; ammonium dihydrogen phosphate, 1150.1 g; water, 20 L; |
| Comparative Example 5 and Comparative Example 15 | LiMn_{0.60}Fe_{0.395}Mg_{0.005}PO₄ | Manganese carbonate, 689.6 g; ferrous carbonate, 457.6 g; magnesium carbonate, 4.2 g; water, 5 L; oxalic acid dihydrate, 1260.6 g; | Ferromanganese magnesium oxalate dihydrate (in terms of C₂O₄M_{0.60}Fe_{0.395}Mg_{0.005}•2H₂O) obtained in step S1, 1791.6 g; lithium carbonate, 369.4 g; ammonium dihydrogen phosphate, 1150.1 g; water, 20 L; |
| Comparative Example 6 | LiMn_{0.60}Fe_{0.35}Ni_{0.05}PO₄ | Manganese carbonate, 689.6 g; ferrous carbonate, 405.4 g; nickel carbonate, 59.3 g; water, 5 L; oxalic acid dihydrate, 1260.6 g; | Ferromanganese nickel oxalate dihydrate (in terms of C₂O₄Mn_{0.60}Fe_{0.35}Ni_{0.05}•2H₂O) obtained in step S1, 1794.6 g; lithium carbonate, 369.4 g; ammonium dihydrogen phosphate, 1150.1 g; water, 20 L; |
| Comparative Example 7 and Comparative Example 9 | LiMn_{0.60}Fe_{0.395}V_{0.002}Ni_{0.003}PO₄ | Manganese carbonate, 689.6 g; ferrous carbonate, 457.6 g; vanadium dichloride, 2.4 g; nickel carbonate, 3.6 g; water, 5 L; oxalic acid dihydrate, 1260.6 g; | Ferromanganese vanadium nickel oxalate dihydrate (in terms of C₂O₄Mn_{0.60}Fe_{0.395}V_{0.002}Ni_{0.003}•2H₂O) obtained in step S1, 1793.2 g; lithium carbonate, 369.4 g; ammonium dihydrogen phosphate, 1150.1 g; water, 20 L; |
| Comparative Example 8 | LiMn_{0.60}Fe_{0.395}V_{0.002}Mg_{0.003}PO₄ | Manganese carbonate, 689.6 g; ferrous carbonate, 457.6 g; vanadium dichloride, 2.4 g; magnesium carbonate, 2.53 g; water, 5 L; oxalic acid dihydrate, 1260.6 g; | Ferromanganese vanadium magnesium oxalate dihydrate (in terms of C₂O₄Mn_{0.60}Fe_{0.395}V_{0.002}Mg_{0.003}•2H₂O) obtained in step S1, 1792.1 g; lithium carbonate, 369.4 g; ammonium dihydrogen phosphate, 1150.1 g; water, 20 L; |
| Comparative Examples 10 to 12, Comparative Examples 16 and 17, and Examples 1 to 10 | Li_{0.997}Mn_{0.60}Fe_{0.393}V_{0.004}Co_{0.003}P_{0.997}S_{0.003}O₄ | Manganese carbonate, 689.6 g; ferrous carbonate, 455.3 g; cobalt sulfate, 4.7 g; vanadium dichloride, 4.9 g; water, 5 L; oxalic acid dihydrate, 1260.6 g; | Ferromanganese vanadium cobalt oxalate dihydrate (in terms of C₂O₄M_{0.60}FC_{0.393}V_{0.004}CO_{0.003}•2H₂O) obtained in step S1, 1793.1 g; lithium carbonate, 368.3 g; ammonium dihydrogen phosphate, 1146.6 g; dilute sulfuric acid, 4.9 g; water, 20 L; |
| Comparative Example 14 | Li_{1.2}MnP_{0.8}Si_{0.2}O₄ | Manganese carbonate, 1149.3 g; water, 5 L; oxalic acid dihydrate, 1260.6 g; | Manganese oxalate dihydrate (in terms of C₂O₄Mn•2H₂O) obtained in step S1, 1789.6 g; lithium carbonate, 443.3 g; ammonium dihydrogen phosphate, 920.1 g; metasilicic acid, 156.2 g; water, 20 L; |
| Example 11 | Li_{1.001}Mn_{0.60}Fe_{0.393}V_{0.004}Co_{0.003}P_{0.999}Si_{0.001}O₄ | Manganese carbonate, 689.6 g; ferrous carbonate, 455.3 g; cobalt sulfate, 4.7 g; vanadium dichloride, 4.9 g; water, 5 L; oxalic acid dihydrate, 1260.6 g; | Ferromanganese vanadium cobalt oxalate dihydrate (in terms of C₂O₄M_{0.60}FC_{0.393}V_{0.004}CO_{0.003}•2H₂O) obtained in step S1, 1793.1 g; lithium carbonate, 369.8 g; ammonium dihydrogen phosphate, 1148.9 g; metasilicic acid, 0.8 g; water, 20 L; |
| Example 12 | LiMn_{0.60}Fe_{0.393}V_{0.004}Co_{0.003}P_{0.998}N_{0.002}O₄ | Manganese carbonate, 689.6 g; ferrous carbonate, 455.3 g; cobalt sulfate, 4.7 g; vanadium dichloride, 4.9 g; water, 5 L; oxalic acid dihydrate, 1260.6 g; | Ferromanganese vanadium cobalt oxalate dihydrate (in terms of C₂O₄M_{0.60}FC_{0.393}V_{0.004}CO_{0.003}•2H₂O) obtained in step S1, 1793.1 g; lithium carbonate, 369.4 g; ammonium dihydrogen phosphate, 1147.8 g; dilute nitric acid, 2.7 g; water, 20 L; |
| Example 13 | Li_{0.995}Mn_{0.65}Fe_{0.341}V_{0.004}Co_{0.005}P_{0.995}S_{0.005}O₄ | Manganese carbonate, 747.1 g; ferrous carbonate, 395.1 g; cobalt sulfate, 7.8 g; vanadium dichloride, 4.9 g; water, 5 L; oxalic acid dihydrate, 1260.6 g; | Ferromanganese vanadium cobalt oxalate dihydrate (in terms of C₂O₄Mn_{0.65}Fe_{0.341}V_{0.004}CO_{0.005}•2H₂O) obtained in step S1, 1792.7 g; lithium carbonate, 367.6 g; ammonium dihydrogen phosphate, 1144.3 g; dilute sulfuric acid, 8.2 g; water, 20 L; |
| Example 14 | Li_{1.002}Mn_{0.70}Fe_{0.293}V_{0.004}Co_{0.003}P_{0.998}Si_{0.002}O₄ | Manganese carbonate, 804.6 g; ferrous carbonate, 339.5 g; cobalt sulfate, 4.7 g; vanadium dichloride, 4.9 g; water, 5 L; oxalic acid dihydrate, 1260.6 g; | Ferromanganese vanadium cobalt oxalate dihydrate (in terms of C₂O₄Mn_{0.70}Fe_{0.293}V_{0.004}Co_{0.003}•2H₂O) obtained in step S1, 1792.2 g; lithium carbonate, 370.2 g; 1147.8; metasilicic acid, 1.6 g; water, 20 L; |
| Examples 15 and 17 | LiMn_{0.60}Fe_{0.393}V_{0.004}Co_{0.003}P_{0.999}N_{0.001}O₄ | Manganese carbonate, 689.6 g; ferrous carbonate, 455.3 g; cobalt sulfate, 4.7 g; vanadium dichloride, 4.9 g; water, 5 L; oxalic acid dihydrate, 1260.6 g; | Ferromanganese vanadium cobalt oxalate dihydrate (in terms of C₂O₄M_{0.60}FC_{0.393}V_{0.004}CO_{0.003}•2H₂O) obtained in step S1, 1793.1 g; lithium carbonate, 369.4 g; ammonium dihydrogen phosphate, 1148.9 g; dilute nitric acid, 1.4 g; water, 20 L; |
| Example 16 | Li_{0.997}Mn_{0.60}Fe_{0.393}V_{0.004}Co_{0.003}P_{0.997}S_{0.003}O₄ | Manganese carbonate, 689.6 g; ferrous carbonate, 455.3 g; cobalt sulfate, 4.7 g; vanadium dichloride, 4.9 g; water, 5 L; oxalic acid dihydrate, 1260.6 g; | Ferromanganese vanadium cobalt oxalate dihydrate (in terms of C₂O₄M_{0.60}FC_{0.393}V_{0.004}CO_{0.003}•2H₂O) obtained in step S1, 1793.1 g; lithium carbonate, 368.7 g; ammonium dihydrogen phosphate, 1146.6 g; dilute sulfuric acid, 4.9 g; water, 20 L; |
| Example 18 | LiMn_{0.60}Fe_{0.393}V_{0.004}Mg_{0.003}P_{0.995}N_{0.005}O₄ | Manganese carbonate, 689.6 g; ferrous carbonate, 455.3 g; magnesium carbonate, 2.5 g; vanadium dichloride, 4.9 g; water, 5 L; oxalic acid dihydrate, 1260.6 g; | Ferromanganese vanadium magnesium oxalate dihydrate (in terms of C₂O₄Mn_{0.60}Fe_{0.393}V_{0.004}Mg_{0.003}•2H₂O) obtained in step S1, 1791.1 g; lithium carbonate, 369.4 g; ammonium dihydrogen phosphate, 1144.3 g; dilute nitric acid, 7.0 g; water, 20 L; |
| Example 19 | Li_{0.999}Mn_{0.60}Fe_{0.393}V_{0.004}Mg_{0.003}P_{0.999}S_{0.001}O₄ | Manganese carbonate, 689.6 g; ferrous carbonate, 455.3 g; magnesium carbonate, 2.5 g; vanadium dichloride, 4.9 g; water, 5 L; oxalic acid dihydrate, 1260.6 g; | Ferromanganese vanadium magnesium oxalate dihydrate (in terms of C₂O₄M_{0.60}Fe_{0.393}V_{0.004}Mg_{0.003}•2H₂O) obtained in step S1, 1791.1 g; lithium carbonate, 369.0 g; ammonium dihydrogen phosphate, 1148.9 g; dilute sulfuric acid, 1.6 g; water, 20 L; |
| Example 20 | Li_{0.998}Mn_{0.60}Fe_{0.393}V_{0.004}Ni_{0.003}P_{0.998}S_{0.002}O₄ | Manganese carbonate, 689.6 g; ferrous carbonate, 455.3 g; nickel carbonate, 3.6 g; vanadium dichloride, 4.9 g; water, 5 L; oxalic acid dihydrate, 1260.6 g; | Ferromanganese vanadium nickel oxalate dihydrate (in terms of C₂O₄Mn_{0.60}FC_{0.393}V_{0.004}Ni_{0.003}•2H₂O) obtained in step S1, 1792.2 g; lithium carbonate, 368.7 g; ammonium dihydrogen phosphate, 1147.8 g; dilute sulfuric acid, 3.2 g; water, 20 L; |
| Examples 21-24 | Li_{1.001}Mn_{0.60}Fe_{0.393}V_{0.004}Ni_{0.003}P_{0.999}Si_{0.001}O₄ | Manganese carbonate, 689.6 g; ferrous carbonate, 455.3 g; nickel carbonate, 3.6 g; vanadium dichloride, 4.9 g; water, 5 L; oxalic acid dihydrate, 1260.6 g; | Ferromanganese vanadium nickel oxalate dihydrate (in terms of C₂O₄M_{0.60}FC_{0.393}V_{0.004}Ni_{0.003}•2H₂O) obtained in step S1, 1793.1 g; lithium carbonate, 369.8 g; ammonium dihydrogen phosphate, 1148.9 g; metasilicic acid, 0.8 g; water, 20 L; |
| Example 25 | Li_{1.001}Mn_{0.50}Fe_{0.493}V_{0.004}Ni_{0.003}P_{0.999}Si_{0.001}O₄ | Manganese carbonate, 574.7 g; ferrous carbonate, 571.2 g; nickel carbonate, 3.6 g; vanadium dichloride, 4.9 g; water, 5 L; oxalic acid dihydrate, 1260.6 g; | Ferromanganese vanadium nickel oxalate dihydrate (in terms of C₂O₄Mn_{0.50}FC_{0.493}V_{0.004}Ni_{0.003}•2H₂O) obtained in step S1, 1794.0 g; lithium carbonate, 369.8 g; ammonium dihydrogen phosphate, 1148.9 g; metasilicic acid, 0.8 g; water, 20 L; |
| Example 26 | Li_{1.001}Mn_{0.999}Fe_{0.001}P_{0.999}Si_{0.001}O₄ | Manganese carbonate, 1148.2 g; ferrous carbonate, 1.2 g; water, 5 L; oxalic acid dihydrate, 1260.6 g; | Ferromanganese oxalate dihydrate (in terms of C₂O₄Mn_{0.999}Fe_{0.001}•2H₂O) obtained in step S1, 1789.6 g; lithium carbonate, 369.8 g; ammonium dihydrogen phosphate 1148.9 g; metasilicic acid, 0.8 g; water, 20 L; |
| Example 27 | LiMn_{0.60}Fe_{0.393}V_{0.004}Ni_{0.003}P_{0.9}N_{0.100}O₄ | Manganese carbonate, 689.6 g; ferrous carbonate, 455.3 g; nickel carbonate, 3.6 g; vanadium dichloride, 4.9 g; water, 5 L; oxalic acid dihydrate, 1260.6 g; | Ferromanganese vanadium nickel oxalate dihydrate (in terms of C₂O₄Mn_{0.60}Fe_{0.393}V_{0.004}Ni_{0.003}•2H₂O) obtained in step S1, 1793.1 g; lithium carbonate, 369.4 g; ammonium dihydrogen phosphate, 1035.1 g; dilute nitric acid, 140.0 g; water, 20 L; |
| Example 28 | Li_{1.001}Mn_{0.40}Fe_{0.593}V_{0.004}Ni_{0.003}P_{0.999}Si_{0.001}O₄ | Manganese carbonate, 459.7 g; ferrous carbonate, 686.9 g; vanadium dichloride, 4.8 g; nickel carbonate, 3.6 g; water, 5 L; oxalic acid dihydrate, 1260.6 g; | Ferromanganese vanadium nickel oxalate dihydrate (in terms of C₂O₄Mn_{0.40}Fe_{0.593}V_{0.004}Ni_{0.003}•2H₂O) obtained in step S1, 1794.9 g; lithium carbonate, 369.8 g; ammonium dihydrogen phosphate, 1148.9 g; metasilicic acid, 0.8 g; water, 20 L; |
| Example 29 | Li_{1.001}Mn_{0.40}Fe_{0.393}V_{0.204}Ni_{0.003}P_{0.999}Si_{0.001}O₄ | Manganese carbonate, 459.7 g; ferrous carbonate, 455.2 g; vanadium dichloride, 248.6 g; nickel carbonate, 3.6 g; water, 5 L; oxalic acid dihydrate, 1260.6 g; | Ferromanganese vanadium nickel oxalate dihydrate (in terms of C₂O₄Mn_{0.40}Fe_{0.393}V_{0.204}Ni_{0.003}•2H₂O) obtained in step S1, 1785.1 g; lithium carbonate, 369.8 g; ammonium dihydrogen phosphate, 1148.9 g; metasilicic acid, 0.8 g; water, 20 L; |

**Table 2 Preparation of first coating layer suspension (Step S3)**

| Example No. | First coating layer substance | Preparation of first coating layer suspension |
|---|---|---|
| Comparative Examples 3 and 16 | Amorphous Li₂FeP₂O₇ | 7.4 g of lithium carbonate; 11.6 g of ferrous carbonate; 23.0 g of ammonium dihydrogen phosphate; 12.6 g of oxalic acid dihydrate; with a pH value controlled to be 5 |
| Comparative Examples 11, 13 to 15, and 17, and Examples 1 to 14, 19, and 21 to 29 | Crystalline Li₂FeP₂O₇ | 7.4 g of lithium carbonate; 11.6 g of ferrous carbonate; 23.0 g of ammonium dihydrogen phosphate; 12.6 g of oxalic acid dihydrate; with a pH value controlled to be 5 |
| Examples 15 and 16 | Crystalline Al₄(P₂O₇)₃ | 53.3 g of aluminum chloride; 34.5 g of ammonium dihydrogen phosphate; 18.9 g of oxalic acid dihydrate; with a pH value controlled to be 4 |
| Examples 17, 18, and 20 | Crystalline Li₂NiP₂O₇ | 7.4 g of lithium carbonate; 11.9 g of nickel carbonate; 23.0 g of ammonium dihydrogen phosphate; 12.6 g of oxalic acid dihydrate; with a pH value controlled to be 5 |

**Table 3 Application of first coating layer (Step S4)**

| No. | First coating layer substance and amount thereof (based on weight of core) | Amount of core added in step S4 | Step S4: Application of first coating layer | | | | |
|---|---|---|---|---|---|---|---|
| | | | Amount of corresponding coating substance in first coating layer suspension | Mixin g time (h) | Dryin g temper ature (°C) | Sinteri ng temper ature (°C) | Sinte ring time (h) |
| Comparat ive Example 3 | 2% amorphous Li₂FeP₂O₇ | 1570.4 g | 31.4 g | 6 | 120 | 500 | 4 |
| Comparat ive Example 11 | 1% crystalline Li₂FeP₂O₇ | 1571.1 g | 15.7 g | 6 | 120 | 650 | 6 |
| Comparat ive Example 13 | 2% crystalline Li₂FeP₂O₇ | 1568.5 g | 31.4 g | 6 | 120 | 650 | 6 |
| Comparat ive Example 14 | 2% crystalline Li₂FeP₂O₇ | 1562.8 g | 31.2 g | 6 | 120 | 650 | 6 |
| Comparat ive Example 15 | 2% crystalline Li₂FeP₂O₇ | 1570.6 g | 31.4 g | 6 | 120 | 650 | 6 |
| Comparat ive Example 16 | 2% amorphous Li₂FeP₂O₇ | 1571.1 g | 31.4g | 6 | 120 | 500 | 4 |
| Comparat ive Example 17 | 2% crystalline Li₂FeP₂O₇ | 1571.1 g | 31.4g | 6 | 120 | 650 | 6 |
| Examples 1 to 4 and 8 to 10 | 1%Li₂FeP₂O₇ | 1571.9 g | 15.7 g | 6 | 120 | 650 | 6 |
| Example 5 | 2%Li₂FeP₂O₇ | 1571.9 g | 31.4g | 6 | 120 | 650 | 6 |
| Example 6 | 3% Li₂FeP₂O₇ | 1571.1 g | 47.1 g | 6 | 120 | 650 | 6 |
| Example 7 | 5% Li₂FeP₂O₇ | 1571.9 g | 78.6 g | 6 | 120 | 650 | 6 |
| Example 11 | 1%Li₂FeP₂O₇ | 1572.1 g | 15.7 g | 6 | 120 | 650 | 6 |
| Example 12 | 1%Li₂FeP₂O₇ | 1571.7 g | 15.7 g | 6 | 120 | 650 | 6 |
| Example 13 | 2%Li₂FeP₂O₇ | 1571.4 g | 31.4g | 6 | 120 | 650 | 6 |
| Example 14 | 2.5%Li₂FeP₂ O₇ | 1571.9 g | 39.3 g | 6 | 120 | 650 | 6 |
| Example 15 | 2% Al₄(P₂O₇)₃ | 1571.9 g | 31.4g | 6 | 120 | 680 | 8 |
| Example 16 | 3%Al₄(P₂O₇)₃ | 1571.9 g | 47.2 g | 6 | 120 | 680 | 8 |
| Example 17 | 1.5%Li₂NiP₂ 07 | 1571.9 g | 23.6 g | 6 | 120 | 630 | 6 |
| Example 18 | 1%Li₂NiP₂O₇ | 1570.1 g | 15.7 g | 6 | 120 | 630 | 6 |
| Example 19 | 2%Li₂FeP₂O₇ | 1571.0 g | 31.4g | 6 | 120 | 650 | 6 |
| Example 20 | 1%Li₂NiP₂O₇ | 1571.9 g | 15.7 g | 6 | 120 | 630 | 6 |
| Examples 21-24 | 2%Li₂FeP₂O₇ | 1572.1 g | 31.4 g | 6 | 120 | 650 | 6 |
| Example 22 | 5.50% Li₂FeP₂O₇ | 1572.1 g | 86.5 g | 6 | 120 | 650 | 6 |
| Example 25 | 1%Li₂FeP₂O₇ | 1573.0 g | 15.7 g | 6 | 120 | 650 | 6 |
| Example 26 | 1%Li₂FeP₂O₇ | 1568.6 g | 15.7 g | 6 | 120 | 650 | 6 |
| Example 27 | 1%Li₂FeP₂O₇ | 1569.2 g | 15.7 g | 6 | 120 | 650 | 6 |
| Example 28 | 2% crystalline Li₂FeP₂O₇ | 1573.9 g | 31.4g | 6 | 120 | 650 | 6 |
| Example 29 | 2% crystalline Li₂FeP₂O₇ | 1564.1 g | 31.2 g | 6 | 120 | 650 | 6 |

**Table 4 Preparation of second coating layer suspension (Step S5)**

| Example No. | Second coating layer substance | Step S5: Preparation of second coating layer suspension |
|---|---|---|
| Comparative Example 12; Examples 1 to 14, 18, 19, and 25 to 27 | Crystalline LiFePO₄ | 3.7 g of lithium carbonate; 11.6 g of ferrous carbonate; 11.5 g of ammonium dihydrogen phosphate; 12.6 g of oxalic acid dihydrate |
| Comparative Examples 13 to 16; Examples 15, 17, 20, 21 to 24, 28, and 29 | Crystalline LiCoPO₄ | 3.7 g of lithium carbonate; 15.5 g of cobalt sulfate; 11.5 g of ammonium dihydrogen phosphate; 12.6 g of oxalic acid dihydrate |
| Comparative Example 17 | Amorphous LiCoPO₄ | 3.7 g of lithium carbonate; 15.5 g of cobalt sulfate; 11.5 g of ammonium dihydrogen phosphate; 12.6 g of oxalic acid dihydrate |
| Example 16 | Crystalline LiNiPO₄ | 3.7 g of lithium carbonate; 11.9 g of nickel carbonate; 11.5 g of ammonium dihydrogen phosphate; 12.6 g of oxalic acid dihydrate |

**Table 5 Application of second coating layer (Step S6)**

| No. | Second coating layer substance and amount thereof (based on weight of core) | Amount of pyrophosphate coated material added in step S6 (amount of core added in the case of Comparative Example 12) (g) | Step S6: Application of second coating layer | | | | |
|---|---|---|---|---|---|---|---|
| | | | Amount of corresponding coating substance in second coating layer suspension (g) | Mix ing tim e (h) | Drying temper ature (°C) | Sinteri ng temper ature (°C) | Sinte ring time (h) |
| Compar ative Example 12 | 3%LiFePO ₄ | 1571.1 | 47.1 | 6 | 120 | 700 | 8 |
| Compar ative Example 13 | 4%LiCoPO ₄ | 1599.9 | 62.7 | 6 | 120 | 750 | 8 |
| Compar ative Example 14 | 4%LiCoPO ₄ | 1594.0 | 62.5 | 6 | 120 | 750 | 8 |
| Compar ative Example 15 | 4%LiCoPO ₄ | 1602.0 | 62.8 | 6 | 120 | 750 | 8 |
| Compar ative Example 16 | 4%LiCoPO ₄ | 1602.5 | 62.8 | 6 | 120 | 750 | 8 |
| Compar ative Example 17 | 4% amorphous LiCoPO₄ | 1602.5 | 62.8 | 6 | 120 | 650 | 8 |
| Example s 1-4 | 3%LiFePO ₄ | 1586.8 | 47.1 | 6 | 120 | 700 | 8 |
| Example 5 | 3%LiFePO ₄ | 1602.5 | 47.1 | 6 | 120 | 700 | 8 |
| Example 6 | 3%LiFePO ₄ | 1618.2 | 47.1 | 6 | 120 | 700 | 8 |
| Example 7 | 3%LiFePO ₄ | 1649.6 | 47.1 | 6 | 120 | 700 | 8 |
| Example 8 | 1% LiFePO₄ | 1586.8 | 15.7 | 6 | 120 | 700 | 8 |
| Example 9 | 4% LiFePO₄ | 1586.8 | 62.8 | 6 | 120 | 700 | 8 |
| Example 10 | 5% LiFePO₄ | 1586.8 | 78.6 | 6 | 120 | 700 | 8 |
| Example 11 | 2.50% LiFePO₄ | 1587.8 | 39.3 | 6 | 120 | 700 | 8 |
| Example 12 | 3% LiFePO₄ | 1587.4 | 47.2 | 6 | 120 | 700 | 8 |
| Example 13 | 2% LiFePO₄ | 1602.8 | 31.4 | 6 | 120 | 700 | 8 |
| Example 14 | 3.50% LiFePO₄ | 1610.5 | 55.0 | 6 | 120 | 700 | 8 |
| Example 15 | 2.5%LiCoP O₄ | 1603.3 | 39.3 | 6 | 120 | 750 | 8 |
| Example 16 | 3% LiNiPO₄ | 1619.0 | 47.2 | 6 | 120 | 680 | 8 |
| Example 17 | 2.5%LiCoP O₄ | 1595.5 | 39.3 | 6 | 120 | 750 | 8 |
| Example 18 | 3% LiFePO₄ | 1585.9 | 47.1 | 6 | 120 | 700 | 8 |
| Example 19 | 4% LiFePO₄ | 1602.4 | 62.8 | 6 | 120 | 700 | 8 |
| Example 20 | 3% LiCoPO₄ | 1587.7 | 47.2 | 6 | 120 | 750 | 8 |
| Example 21 | 4% LiCoPO₄ | 1603.5 | 62.9 | 6 | 120 | 750 | 8 |
| Example 22 | 4% LiCoPO₄ | 1658.6 | 62.9 | 6 | 120 | 750 | 8 |
| Example 23 | 5.50% LiCoPO₄ | 1603.5 | 86.5 | 6 | 120 | 750 | 8 |
| Example 24 | 4% LiCoPO₄ | 1603.5 | 62.9 | 6 | 120 | 750 | 8 |
| Example 25 | 3% LiFePO₄ | 1588.7 | 47.2 | 6 | 120 | 700 | 8 |
| Example 26 | 3% LiFePO₄ | 1584.3 | 47.1 | 6 | 120 | 700 | 8 |
| Example 27 | 3% LiFePO₄ | 1584.9 | 47.1 | 6 | 120 | 700 | 8 |
| Example 28 | 4%LiCoPO ₄ | 1605.4 | 63.0 | 6 | 120 | 750 | 8 |
| Example 29 | 4%LiCoPO ₄ | 1605.4 | 63.0 | 6 | 120 | 750 | 8 |

**Table 6 Application of third coating layer (Step S8)**

| | Thir d coati ng layer | Molar ratio of SP2 to SP3 | Amount of material with two coating layers added in step S8 (amount of core added in the case of Comparative Examples 1, 2, and 4 to 10 and amount of material with first coating layer added in the case of Comparative Example 11) (g) | | Step S8: Application of third coating layer | | | | |
|---|---|---|---|---|---|---|---|---|---|
| | | | | Amo unt of sucro se (g) | Amount of ethylened iamine (g) | Mixing time (h) | Dryin g tempe rature (°C) | Sinterin g tempera ture (°C) | Sint erin g time (h) |
| Compa rative Examp le 1 | 1% carb on | 2.5 | 1568.5 | 37.3 | 3.197 | 6 | 150 | 650 | 8 |
| Compa rative Examp le 2 | 2% carb on | 2.8 | 1572.2 | 74.7 | 6.403 | 6 | 150 | 680 | 8 |
| Compa rative Examp le 3 | 2% carb on | 2.7 | 1601.8 | 74.6 | 6.394 | 6 | 150 | 680 | 7 |
| Compa rative Examp le 4 | 1% carb on | 2.4 | 1571.0 | 37.3 | 3.197 | 6 | 150 | 630 | 8 |
| Compa rative Examp le 5 | 1.5% carb on | 2.6 | 1570.6 | 56.0 | 4.800 | 6 | 150 | 650 | 7 |
| Compa rative Examp le 6 | 2.5% carb on | 2.8 | 1573.6 | 93.4 | 8.006 | 6 | 150 | 680 | 8 |
| Compa rative Examp le 7 | 1% carb on | 2.7 | 1572.2 | 37.3 | 3.197 | 6 | 150 | 680 | 7 |
| Compa rative Examp le 8 | 1.5% carb on | 2.9 | 1571.1 | 56.0 | 4.800 | 6 | 150 | 680 | 10 |
| Compa rative Examp le 9 | 1% carb on | 2.2 | 1572.2 | 37.3 | 3.197 | 6 | 150 | 600 | 8 |
| Compa rative Examp le 10 | 1% carb on | 2.4 | 1571.1 | 37.3 | 3.197 | 6 | 150 | 630 | 8 |
| Compa rative Examp le 11 | 1% carb on | 2.3 | 1586.8 | 37.3 | 3.197 | 6 | 150 | 620 | 8 |
| Compa rative Examp le 12 | 1% carb on | 2.1 | 1618.2 | 37.3 | 3.197 | 6 | 150 | 600 | 6 |
| Compa rative Examp le 13 | 1% carb on | 2 | 1662.6 | 37.3 | 3.197 | 6 | 120 | 600 | 6 |
| Compa rative Examp le 14 | 1% carb on | 1.8 | 1656.5 | 37.1 | 3.180 | 6 | 120 | 600 | 6 |
| Compa rative Examp le 15 | 1% carb on | 1.7 | 1664.8 | 37.3 | 3.197 | 6 | 100 | 600 | 6 |
| Compa rative Examp le 16 | 1% carb on | 3.1 | 1665.4 | 37.3 | 3.197 | 6 | 150 | 700 | 10 |
| Compa rative Examp le 17 | 1% carb on | 3.5 | 1665.4 | 37.3 | 3.197 | 6 | 150 | 750 | 10 |
| Examp le 1 | 1% carb on | 2.2 | 1633.9 | 37.3 | 3.197 | 6 | 150 | 700 | 10 |
| Examp le 2 | 3% carb on | 2.3 | 1633.9 | 111.9 | 9.591 | 6 | 150 | 600 | 9 |
| Examp le 3 | 4% carb on | 2.1 | 1633.9 | 149.2 | 12.788 | 6 | 150 | 600 | 6 |
| Examp le 4 | 5% carb on | 2.4 | 1633.9 | 186.5 | 15.986 | 6 | 150 | 630 | 8 |
| Examp le 5 | 1% carb on | 2.5 | 1649.6 | 37.3 | 3.197 | 6 | 150 | 650 | 8 |
| Examp le 6 | 1% carb on | 2.5 | 1665.3 | 37.3 | 3.197 | 6 | 150 | 650 | 8 |
| Examp le 7 | 1% carb on | 2.4 | 1696.7 | 37.3 | 3.197 | 6 | 150 | 630 | 8 |
| Examp le 8 | 1% carb on | 2.3 | 1602.5 | 37.3 | 3.197 | 6 | 150 | 600 | 9 |
| Examp le 9 | 1% carb on | 2.2 | 1649.6 | 37.3 | 3.197 | 6 | 150 | 600 | 8 |
| Examp le 10 | 1% carb on | 2.2 | 1665.3 | 37.3 | 3.197 | 6 | 150 | 600 | 9 |
| Examp le 11 | 1.5% carb on | 2.3 | 1629.0 | 56.1 | 4.809 | 6 | 150 | 600 | 9 |
| Examp le 12 | 2% carb on | 2.4 | 1634.6 | 74.7 | 6.403 | 6 | 150 | 630 | 8 |
| Examp le 13 | 2% carb on | 2.5 | 1634.2 | 74.6 | 6.394 | 6 | 150 | 650 | 8 |
| Examp le 14 | 2.5% carb on | 2.7 | 1665.5 | 93.3 | 7.997 | 6 | 150 | 680 | 7 |
| Examp le 15 | 2% carb on | 2.8 | 1642.6 | 74.7 | 6.403 | 6 | 150 | 680 | 8 |
| Examp le 16 | 1% carb on | 2.7 | 1666.2 | 37.3 | 3.197 | 6 | 150 | 680 | 7 |
| Examp le 17 | 1.5% carb on | 2.3 | 1634.8 | 56.0 | 4.800 | 6 | 150 | 600 | 9 |
| Examp le 18 | 1% carb on | 2.6 | 1633.0 | 37.3 | 3.197 | 6 | 150 | 650 | 7 |
| Examp le 19 | 1.5% carb on | 2.4 | 1665.2 | 56.0 | 4.800 | 6 | 150 | 630 | 8 |
| Examp le 20 | 1.5% carb on | 2.2 | 1634.8 | 56.0 | 4.800 | 6 | 150 | 600 | 9 |
| Examp le 21 | 1% carb on | 2.2 | 1666.4 | 37.3 | 3.197 | 6 | 150 | 600 | 9 |
| Examp le 22 | 1% carb on | 2.3 | 1721.4 | 37.3 | 3.197 | 6 | 150 | 600 | 9 |
| Examp le 23 | 1% carb on | 2.4 | 1690.0 | 37.3 | 3.197 | 6 | 150 | 630 | 8 |
| Examp le 24 | 5.5% carb on | 2.6 | 1666.4 | 205.4 | 17.606 | 6 | 150 | 650 | 7 |
| Examp le 25 | 1% carb on | 2.4 | 1635.9 | 37.4 | 3.206 | 6 | 150 | 630 | 8 |
| Examp le 26 | 1% carb on | 2.3 | 1631.3 | 37.3 | 3.197 | 6 | 150 | 600 | 9 |
| Examp le 27 | 1.5% carb on | 2.1 | 1631.9 | 55.9 | 4.791 | 6 | 150 | 600 | 6 |
| Examp le 28 | 1% carb on | 0.07 | 1668.3 | 37.4 | 3.206 | 6 | 80 | 600 | 6 |
| Examp le 29 | 1% carb on | 13 | 1668.3 | 37.4 | 3.206 | 6 | 150 | 850 | 10 |

### Examples 30-42: Examination of other coating layer substances

Examples 30-42 were carried out in a method similar to that for Example 1. Tables 7-10 below give the differences.

**Table 7 Examination of first coating layer substance**

| No. | First coating layer substan ce | Preparation of first coating layer suspension |
|---|---|---|
| Exam ple 30 | Li₂MgP ₂O₇ | 7.4 g of lithium carbonate; 8.4 g of magnesium carbonate; 23.0 g of ammonium dihydrogen phosphate; 12.6 g of oxalic acid dihydrate |
| Exam ple 31 | Li₂CoP₂ O₇ | 7.4 g of lithium carbonate; 15.5 g of cobalt sulfate; 23.0 g of ammonium dihydrogen phosphate; 12.6 g of oxalic acid dihydrate |
| Exam ple 32 | Li₂CuP₂ O₇ | 7.4 g of lithium carbonate; 16.0 g of copper sulfate; 23.0 g of ammonium dihydrogen phosphate; 12.6 g of oxalic acid dihydrate |
| Exam ple 33 | Li₂ZnP₂ O₇ | 7.4 g of lithium carbonate; 12.5 g of zinc carbonate; 23.0 g of ammonium dihydrogen phosphate; 12.6 g of oxalic acid dihydrate |
| Exam ple 34 | TiP₂O₇ | 24.0 g of titanium sulfate; 23.0 g of ammonium dihydrogen phosphate; 12.6 g of oxalic acid dihydrate |
| Exam ple 35 | Ag₄P₂O ₇ | 67.9 g of silver nitrate; 23.0 g of ammonium dihydrogen phosphate; 25.2 g of oxalic acid dihydrate |
| Exam ple 36 | ZrP₂O₇ | 56.6 g of zirconium sulfate; 23.0 g of ammonium dihydrogen phosphate; 25.2 g of oxalic acid dihydrate |

**Table 8 Examination of second coating layer substance**

| No. | Second coating layer substa nce | Preparation of second coating layer suspension |
|---|---|---|
| Exam ple 37 | Cu₃(P O₄)₂ | 48.0 g of copper sulfate; 23.0 g of ammonium dihydrogen phosphate; 37.8 g of oxalic acid dihydrate |
| Exam ple 38 | Zn₃(P O₄)₂ | 37.6 g of zinc carbonate; 23.0 g of ammonium dihydrogen phosphate; 37.8 g of oxalic acid dihydrate |
| Exam ple 39 | Ti₃(PO 4)4 | 72.0 g of titanium sulfate; 46.0 g of ammonium dihydrogen phosphate; 75.6 g of oxalic acid dihydrate |
| Exam ple 40 | Ag₃PO ₄ | 50.9 g of silver nitrate; 11.5 g of ammonium dihydrogen phosphate; 18.9 g of oxalic acid dihydrate; |
| Exam ple 41 | Zr₃(PO ₄)₄ | 85.0 g of zirconium sulfate; 46.0 g of ammonium dihydrogen phosphate; 37.8 g of oxalic acid dihydrate; |
| Exam ple 42 | AlPO₄ | 13.3 g of aluminum chloride; 11.5 g of ammonium dihydrogen phosphate; 18.9 g of oxalic acid dihydrate |

**Table 9 Examination of other first coating layer substances (Examples 43-49)**

| No. | First coating layer substance | Preparation of coating layer suspension |
|---|---|---|
| Example 43 | Li₂MgP₂O₇ | 7.4 g of lithium carbonate, 8.4 g of magnesium carbonate, 23.0 g of ammonium dihydrogen phosphate, and 12.6 g of oxalic acid dihydrate were dissolved in 500 mL of deionized water, with a pH value controlled to be 5; the mixture was stirred for full reaction for 2 h to obtain a solution; and then the solution was heated to 80°C and kept at this temperature for 4 h to obtain a suspension. |
| Example 44 | Li₂CoP₂O₇ | 7.4 g of lithium carbonate, 15.5 g of cobalt sulfate, 23.0 g of ammonium dihydrogen phosphate, and 12.6 g of oxalic acid dihydrate were dissolved in 500 mL of deionized water, with a pH value controlled to be 5; the mixture was stirred for full reaction for 2 h to obtain a solution; and then the solution was heated to 80°C and kept at this temperature for 4 h to obtain a suspension. |
| Example 45 | Li₂CuP₂O₇ | 7.4 g of lithium carbonate, 16.0 g of copper sulfate, 23.0 g of ammonium dihydrogen phosphate, and 12.6 g of oxalic acid dihydrate were dissolved in 500 mL of deionized water, with a pH value controlled to be 5; the mixture was stirred for full reaction for 2 h to obtain a solution; and then the solution was heated to 80°C and kept at this temperature for 4 h to obtain a suspension. |
| Example 46 | Li₂ZnP₂O₇ | 7.4 g of lithium carbonate, 12.5 g of zinc carbonate, 23.0 g of ammonium dihydrogen phosphate, and 12.6 g of oxalic acid dihydrate were dissolved in 500 mL of deionized water, with a pH value controlled to be 5; the mixture was stirred for full reaction for 2 h to obtain a solution; and then the solution was heated to 80°C and kept at this temperature for 4 h to obtain a suspension. |
| Example 47 | TiP₂O₇ | 24.0 g of titanium sulfate, 23.0 g of ammonium dihydrogen phosphate, and 12.6 g of oxalic acid dihydrate were dissolved in 500 mL of deionized water, with a pH value controlled to be 5; the mixture was stirred for full reaction for 2 h to obtain a solution; and then the solution was heated to 80°C and kept at this temperature for 4 h to obtain a suspension. |
| Example 48 | Ag₄P₂O₇ | 67.9 g of silver nitrate, 23.0 g of ammonium dihydrogen phosphate, and 25.2 g of oxalic acid dihydrate were dissolved in 500 mL of deionized water, with a pH value controlled to be 5; the mixture was stirred for full reaction for 2 h to obtain a solution; and then the solution was heated to 80°C and kept at this temperature for 4 h to obtain a suspension. |
| Example 49 | ZrP₂O₇ | 56.6 g of zirconium sulfate, 23.0 g of ammonium dihydrogen phosphate, and 25.2 g of oxalic acid dihydrate were dissolved in 500 mL of deionized water, with a pH value controlled to be 5; the mixture was stirred for full reaction for 2 h to obtain a solution; and then the solution was heated to 80°C and kept at this temperature for 4 h to obtain a suspension. |

**Table 10 Examination of other second coating layer substances (Examples 50-55)**

| No. | Crystalline second coating layer substance | Preparation of coating layer suspension |
|---|---|---|
| Example 50 | Cu₃(PO₄)₂ | 48.0 g of copper sulfate, 23.0 g of ammonium dihydrogen phosphate, and 37.8 g of oxalic acid dihydrate were dissolved in 1500 mL of deionized water; the mixture was stirred for full reaction for 6 h to obtain a solution; and then the solution was heated to 120°C and kept at this temperature for 6 h to obtain a suspension. |
| Example 51 | Zn₃(PO₄)₂ | 37.6 g of zinc carbonate, 23.0 g of ammonium dihydrogen phosphate, and 37.8 g of oxalic acid dihydrate were dissolved in 1500 mL of deionized water; the mixture was stirred for full reaction for 6 h to obtain a solution; and then the solution was heated to 120°C and kept at this temperature for 6 h to obtain a suspension. |
| Example 52 | Ti₃(PO₄)₄ | 72.0 g of titanium sulfate, 46.0 g of ammonium dihydrogen phosphate, and 75.6 g of oxalic acid dihydrate were dissolved in 1500 mL of deionized water; the mixture was stirred for full reaction for 6 h to obtain a solution; and then the solution was heated to 120°C and kept at this temperature for 6 h to obtain a suspension. |
| Example 53 | Ag₃PO₄ | 50.9 g of silver nitrate, 11.5 g of ammonium dihydrogen phosphate, and 18.9 g of oxalic acid dihydrate were dissolved in 1500 mL of deionized water; the mixture was stirred for full reaction for 6 h to obtain a solution; and then the solution was heated to 120°C and kept at this temperature for 6 h to obtain a suspension. |
| Example 54 | Zr3(PO₄)₄ | 85.0 g of zirconium sulfate, 46.0 g of ammonium dihydrogen phosphate, and 37.8 g of oxalic acid dihydrate were dissolved in 1500 mL of deionized water; the mixture was stirred for full reaction for 6 h to obtain a solution; and then the solution was heated to 120°C and kept at this temperature for 6 h to obtain a suspension. |
| Example 55 | AlPO₃ | 13.3 g of aluminum chloride, 11.5 g of ammonium dihydrogen phosphate, and 18.9 g of oxalic acid dihydrate were dissolved in 1500 mL of deionized water; the mixture was stirred for full reaction for 6 h to obtain a solution; and then the solution was heated to 120°C and kept at this temperature for 6 h to obtain a suspension. |

### II. Performance evaluation

### 1. Test method of lattice change rate

At a constant temperature of 25°C, the positive electrode active material samples were placed in an XRD instrument (model: Bruker D8 Discover), and the samples were tested at 1°/min. The test data were organized and analyzed, and the lattice constants a0, bO, c0, and v0 (where a0, bO, and cO represent the lengths of faces of the unit cell, and vO denotes the volume of the unit cell, which can be obtained directly from XRD refinement results) at that point were calculated with reference to the standard PDF card.

The positive electrode active material samples were prepared into button cells using the button cell preparation method in the foregoing examples, and the button cells were charged at a small rate of 0.05C until the current was reduced to 0.01C. The positive electrode plate in the button cell was then taken and placed in dimethyl carbonate (DMC) for soaking for 8 hours, dried, and scraped for powder, and particles with a particle size less than 500 nm were sifted out from the powder. Samples were taken and subjected to the same way as the fresh samples under test above to calculate their unit cell volumes vl, and (v0-v1)/v0×100% was taken as their lattice change rates (unit cell volume change rate) before and after complete lithium deintercalation or intercalation to be listed in the table.

### 2. Li/Mn anti-site defect concentration

The XRD test results in "test method of lattice change rate" were compared with the PDF (Powder Diffraction File) card of the standard crystal to obtain the Li/Mn anti-site defect concentration. Specifically, the XRD test results in the "test method of lattice change rate" were imported into the general structural analysis system (GSAS) software to automatically derive the refinement results, which contain the occupancy of the different atoms, and then the Li/Mn anti-site defect concentration was obtained by reading the refinement results.

### 3. Compacted density

5 g of the foregoing prepared positive electrode active material powder was taken and put in a special mold for compaction (CARVER mold, model 13 mm, USA), and then the mold was put on the compacted density apparatus. A pressure of 3 tons was applied, the thickness of the powder under pressure (thickness after pressure relief) on the apparatus was read, and the compacted density was calculated based on p=m/v, where the area value used was the area of standard small picture, 1540.25 mm².

### 4. Ratio of 3C constant current charge (%)

New full batteries prepared from the foregoing examples and comparative examples were left standing for 5 min at 25°C in a constant temperature environment and discharged to 2.5 V at 1/3C. The full batteries were left standing for 5 min, charged to 4.3 V at 1/3C, and then charged at a constant voltage of 4.3 V to a current less than or equal to 0.05 mA. The full batteries were left standing for 5 min. The charge capacity at that point was recorded as CO. The full batteries were discharged at 1/3C to 2.5 V, left standing for 5 min, then charged at 3C to 4.3 V, and left standing for 5 min. The charge capacity at that point was recorded as Cl. The ratio of 3C constant current charge was C1/C0×100%.

A higher ratio of 3C constant current charge indicates better rate performance of the secondary battery.

### 5. Transition metal Mn (and Mn-site doped Fe) dissolution test

Full batteries prepared in the foregoing examples and comparative examples were cycled at 45°C until capacity faded to 80% and discharged to a cut-off voltage of 2.0 V at a rate of 0.1C. The cell was then disassembled, the negative electrode tab was removed, and 30 discs with a unit area (1540.25 mm²) were randomly taken on the negative electrode tab and tested by using Agilent ICP-OES730 for inductively coupled plasma atomic emission spectroscopy (ICP). The amounts of Fe (if the Mn site of the positive electrode active material was doped with Fe) and Mn were calculated from the ICP results, so as to calculate the amount of Mn (and Fe doped at the Mn site) dissolved after the cycling. The test standard is in accordance with EPA-6010D-2014.

### 6. Surface oxygen valence

5 g of the foregoing prepared positive electrode active material sample was taken to prepare into a button cell according to the preparation method of button cell as described in the foregoing examples. The button cell was charged at a small rate of 0.05C until the current was reduced to 0.01C. The positive electrode plate was then taken out from the button cell and placed in DMC for 8 hours, dried, and scraped for powder, and particles with a particle size less than 500 nm were sifted out from the powder. The obtained particles were measured by using electron energy loss spectroscopy (EELS; the model of the instrument used was Tales F200S) to obtain energy loss near edge structures (ELNES) that reflect the density of states and energy level distribution of elements. Based on the density of states and energy level distribution, the number of occupying electrons was calculated by integrating the data of the valence band density of states to deduce the surface oxygen valence after charging.

### 7. Measurement of elements manganese and phosphorus in positive electrode active material

5 g of the foregoing prepared positive electrode active material was dissolved in 100 ml of inverse aqua regia (concentrated hydrochloric acid:concentrated nitric acid = 1:3) (concentration of concentrated hydrochloric acid is about 37%, and concentration of concentrated nitric acid is about 65%), the percentage of each element in the solution was tested using ICP, and then the percentage of element manganese or element phosphorus (amount of element manganese or element phosphorus/amount of positive electrode active material × 100%) was measured and converted to get its weight percentage.

### 8. Initial gram capacity test method of button battery

Under a voltage of 2.5 V to 4.3 V, the prepared button batteries of the foregoing examples and comparative examples were charged to 4.3 V at 0.1C, then charged at a constant voltage of 4.3 V to a current less than or equal to 0.05 mA, left standing for 5 min, and then discharged to 2.0 V at 0.1C. The discharge capacity at that point was an initial gram capacity and recorded as D0.

### 9. Cell swelling test of full battery after 30 days of storage at 60°C

The prepared full batteries of the foregoing examples and comparative examples at 100% state of charge (SOC) were stored at 60°C. The open circuit voltage (OCV) and alternating current internal resistance (IMP) of the cells were measured before, during, and after storage to monitor the SOCs and the volumes of the cells were measured. The full batteries were taken out after every 48 h of storage and left standing for 1 h. Then the open circuit voltage (OCV) and internal resistance (IMP) were measured, and the cell volumes were measured by a drainage method after the cells were cooled to room temperature. In the drainage method, first, a scale that automatically performs unit conversion on dial data was used to separately measure a weight of the cell, denoted as F₁, then the cell was completely placed into deionized water (density given to be 1 g/cm³), and the weight of the cell at that point was measured as F₂. The buoyant force experienced by the cell, denoted as F_{buoyant}, was calculated as F₁-F₂. Then, according to Archimedes' principle, F_{buoyant}= ρ × g × V_{displacement}, the volume V of the cell could be calculated as V=(F₁-F₂)/(ρ × g).

It can be learned from the OCV and IMP test results that the cells of all the examples always maintained an SOC of above 99% throughout the storage test.

After 30 days of storage, the cell volumes were measured and the percentage increases in the cell volumes after storage relative to the cell volumes before storage were calculated.

### 10. 45°C cycling performance test of full battery

At a constant temperature of 45°C, the battery was charged to 4.3 V at 1C under a voltage of 2.5-4.3 V, and then charged to a current less than or equal to 0.05 mA at a constant voltage of 4.3 V. After left standing for 5 min, the battery was discharged to 2.5 V at 1C, and a capacity at that point was recorded as Dₙ (n=0, 1, 2, ...). The previous process was repeated until the capacity faded (fading) to 80%, and the number of repetitions at that point was recorded, which is the number of cycles corresponding to 80% capacity retention rate at 45°C.

### 11. Interplanar spacing and included angle test

1 g of each prepared positive electrode active material powder was taken and placed into a 50 mL test tube, 10 mL of alcohol with a mass fraction of 75% was injected into the test tube, and the substances were then fully stirred and dispersed for 30 minutes. Then an appropriate amount of the solution was taken with a clean disposable plastic pipette and added dropwise on a 300 mesh copper grid. At that point, part of the powder would remain on the copper grid. The copper grid with the sample was transferred to the TEM (Tales F200s G2) sample cavity for testing, and original TEM test images were obtained and saved in an original image format (xx.dm3).

The original image obtained from the TEM test was opened in DigitalMicrograph software, and Fourier transform was performed (done automatically by the software upon clicking) to obtain a diffraction pattern. A distance from the diffraction spot to the center of the diffraction pattern was measured to obtain the interplanar spacing, and the included angle was calculated according to the Bragg equation.

By comparing the obtained interplanar spacing and corresponding included angle with their respective standard values, the different substances in the coating layers could be identified.

### 12. Coating layer thickness test

The thickness of the coating was tested mainly in the following manner. A thin slice of about 100 nm thickness was cut from the middle of a single particle of the prepared positive electrode active material by FIB, then a TEM test was performed on the thin slice, and original TEM test images were obtained and saved in an original image format (xx.dm3).

The original image obtained from the TEM test was opened in DigitalMicrograph software, the coating was identified by using the information of the lattice spacing and included angle, and the thickness of the coating was measured.

The thicknesses at three locations were measured for the selected particle and the average value was taken.

### 13. Measurement of molar ratio of SP2 carbon to SP3 carbon in third coating layer

This test was performed by Raman (Raman) spectroscopy. The energy spectrum of the Raman test was split to obtain Id/Ig, where Id is a peak intensity of SP3 carbon and Ig is a peak intensity of SP2 carbon, and then the molar ratio therebetween was determined.

### 14. Determination of chemical formula of core and compositions of different coating layers

An aberration corrected scanning transmission electron microscope (ACSTEM) was used for high spatial resolution characterization of the internal microstructure and surface structure of the positive electrode active material, and the chemical formula of the core and the compositions of different coating layers of the positive electrode active material were obtained in combination with three-dimensional reconstruction techniques.

The performance test results of all the examples and the comparative examples are shown in the following tables.

**Table 11 Performance of positive electrode active material powder and battery performance of batteries prepared in Examples 1-27 and Comparative Examples 1-19**

| Example No. | Performance of positive electrode active material powder | | | | | | Battery performance | | |
|---|---|---|---|---|---|---|---|---|---|
| | Lattic e chang e rate (%) | Li/Mn anti-site defect concentrati on (%) | Compact ed density (g/cm³) | Surfac e oxyge n valenc e | Ratio of 3C consta nt current charge (%) | Dissolvin g-out amounts of Mn and Fe after cycling (ppm) | Button cell capacit y at 0.1C (mAh/ g) | Cell swellin g rate after 30 days of storage at 60°C (%) | Number of cycles correspondi ng to 80% capacity retention rate at 45°C |
| Compared ve Example 1 | 11.4 | 5.2 | 1.5 | -1.55 | 55.1 | 2042 | 129.4 | 45.3 | 191 |
| Compared ve Example 2 | 10.6 | 3.3 | 1.67 | -1.51 | 60.4 | 1790 | 130.2 | 47.2 | 245 |
| Compared ve Example 3 | 10.8 | 3.4 | 1.64 | -1.64 | 57.3 | 1735 | 149.0 | 41.5 | 381 |
| Compared ve Example 4 | 4.3 | 2.8 | 1.69 | -1.82 | 61.9 | 1112 | 155.7 | 8.6 | 556 |
| Comparati ve Example 5 | 2.8 | 2.5 | 1.65 | -1.85 | 64.0 | 35 | 152.9 | 7.3 | 674 |
| Comparati ve Example 6 | 3.4 | 2.4 | 1.61 | -1.86 | 64.2 | 68 | 154.1 | 8.9 | 680 |
| Comparati ve Example 7 | 4.5 | 2.4 | 1.73 | -1.83 | 65.1 | 82 | 153.1 | 8.5 | 675 |
| Comparati ve Example 8 | 2.3 | 2.4 | 1.68 | -1.89 | 65.2 | 32 | 156.9 | 7.1 | 661 |
| Comparati ve Example 9 | 2.3 | 2.4 | 1.75 | -1.89 | 65.8 | 29 | 156.9 | 7.6 | 678 |
| Comparati ve Example 10 | 2.3 | 2.2 | 1.81 | -1.9 | 70.5 | 30 | 156.8 | 7.5 | 691 |
| Comparati ve Example 11 | 2.3 | 2.2 | 1.92 | -1.92 | 71.9 | 11 | 156.9 | 5.2 | 100 |
| Comparati ve Example 12 | 2.3 | 2.1 | 1.95 | -1.95 | 72.1 | 17 | 157.2 | 4.7 | 802 |
| Comparati ve Example 13 | 11.4 | 5.2 | 1.63 | -1.96 | 57.6 | 54 | 134.1 | 5.9 | 571 |
| Comparati ve Example 14 | 8.1 | 3.8 | 1.76 | -1.96 | 64.1 | 43 | 139.2 | 5.3 | 636 |
| Comparati ve Example 15 | 2 | 1.8 | 2.13 | -1.96 | 67.4 | 8 | 157.9 | 3.6 | 1136 |
| Comparati ve Example 16 | 2 | 1.9 | 1.95 | -1.96 | 66.6 | 19 | 157.3 | 4.4 | 1036 |
| Comparati ve Example 17 | 2 | 1.9 | 1.9 | -1.89 | 66.4 | 23 | 157.0 | 5.3 | 903 |
| Example 1 | 2.5 | 1.8 | 2.35 | -1.93 | 77.3 | 7 | 159.9 | 4.5 | 1169 |
| Example 2 | 2.5 | 1.8 | 2.24 | -1.94 | 77.2 | 6 | 160.0 | 3.9 | 1268 |
| Example 3 | 2.5 | 1.8 | 2.22 | -1.94 | 77.1 | 5 | 160.1 | 3.6 | 1390 |
| Example 4 | 2.5 | 1.8 | 2.21 | -1.95 | 77.2 | 3 | 158.3 | 2.8 | 1416 |
| Example 5 | 2.5 | 1.8 | 2.33 | -1.93 | 77.1 | 5 | 159.4 | 3.2 | 1509 |
| Example 6 | 2.5 | 1.8 | 2.31 | -1.93 | 76.7 | 4 | 158.9 | 2.9 | 1595 |
| Example 7 | 2.5 | 1.8 | 2.28 | -1.93 | 75.2 | 3 | 158.5 | 2.6 | 1698 |
| Example 8 | 2.5 | 1.8 | 2.29 | -1.93 | 76.0 | 9 | 158.1 | 3.6 | 1068 |
| Example 9 | 2.5 | 1.8 | 2.46 | -1.98 | 80.7 | 6 | 159.3 | 3.1 | 1301 |
| Example 10 | 2.5 | 1.8 | 2.49 | -1.98 | 82.9 | 5 | 159.5 | 2.6 | 1506 |
| Example 11 | 2.6 | 1.9 | 2.38 | -1.97 | 79.6 | 6 | 159.0 | 3.6 | 1065 |
| Example 12 | 2.4 | 1.8 | 2.41 | -1.97 | 82.0 | 4 | 159.0 | 2.4 | 1145 |
| Example 13 | 2.7 | 1.9 | 2.42 | -1.97 | 82.8 | 5 | 161.3 | 3.6 | 1198 |
| Example 14 | 2.8 | 1.9 | 2.45 | -1.97 | 84.2 | 3 | 155.4 | 3.4 | 1286 |
| Example 15 | 2.2 | 1.9 | 2.46 | -1.97 | 81.7 | 3 | 155.4 | 3.6 | 1131 |
| Example 16 | 2.1 | 1.9 | 2.47 | -1.98 | 80.4 | 5 | 155.8 | 3.8 | 1124 |
| Example 17 | 2.5 | 1.7 | 2.41 | -1.98 | 82.8 | 4 | 156.1 | 4.9 | 1306 |
| Example 18 | 2.3 | 1.6 | 2.42 | -1.97 | 83.7 | 4 | 156.9 | 4.5 | 1245 |
| Example 19 | 2.2 | 1.7 | 2.43 | -1.97 | 84.5 | 4 | 156.9 | 4.6 | 1365 |
| Example 20 | 2.6 | 1.8 | 2.42 | -1.94 | 82.9 | 4 | 156.5 | 3.3 | 1456 |
| Example 21 | 2.4 | 1.7 | 2.41 | -1.97 | 83.7 | 4 | 156.1 | 3.6 | 1302 |
| Example 22 | 2.4 | 1.8 | 2.32 | -1.95 | 79.3 | 2 | 154.7 | 2.6 | 1565 |
| Example 23 | 2.3 | 1.7 | 2.46 | -1.96 | 84.0 | 3 | 152.9 | 2.3 | 1674 |
| Example 24 | 2.2 | 1.8 | 2.47 | -1.95 | 83.9 | 3 | 154.7 | 2.7 | 1555 |
| Example 25 | 2.1 | 1.7 | 2.49 | -1.98 | 86.2 | 3 | 160.4 | 2.8 | 1544 |
| Example 26 | 3.6 | 2.5 | 2.21 | -1.97 | 62.0 | 8 | 154.9 | 4.6 | 1091 |
| Example 27 | 2.8 | 2.1 | 2.24 | -1.98 | 81.7 | 6 | 156.1 | 3.6 | 1121 |
| Example 28 | 2.5 | 1.9 | 1.95 | -1.94 | 60.2 | 9 | 155.5 | 6.8 | 998 |
| Example 29 | 2.4 | 1.8 | 1.98 | -1.95 | 75.2 | 7 | 156.3 | 4.3 | 1058 |

As can be seen in table 11, compared with the comparative examples, the examples of this application achieve smaller lattice change rate, smaller Li/Mn anti-site defect concentration, greater compacted density, surface oxygen valence closer to -2 valence, smaller dissolving-out amount of Mn and Fe after cycling, and better battery performance, for example, better high-temperature storage performance, and high-temperature cycling performance.

**Table 12 Thickness of each layer and weight ratio of element manganese to element phosphorus, for positive electrode active materials prepared in Examples 1 to 14, and Comparative Examples 3, 4, and 12**

| No. | Core | First coating layer | Second coating layer | Thir d coat ing laye r | Thick ness of first coatin g layer (nm) | Thick ness of secon d coatin g layer (nm) | Thick ness of third coatin g layer (nm) | Percen tage of eleme nt Mn (wt%) | Wei ght ratio of elem ent Mn to elem ent P |
|---|---|---|---|---|---|---|---|---|---|
| Compar ative Exampl e3 | LiMn_{0.80}Fe_{0.20}PO₄ | 2% amorpho us Li₂FeP₂O 7 | - | 2% carb on; 8% N | 4 | - | 10 | 26.1 | 1.38 3 |
| Compar ative Exampl e4 | LiMn_{0.70}Fe_{0.295}V_{0.005}PO₄ | - | - | 1% carb on; 8% N | - | - | 5 | 24.3 | 1.24 1 |
| Compar ative Exampl e 12 | Li_{0.999}Mn_{0.60}Fe_{0.393}V_{0.004}Co_{0 .003}P_{0.999}S_{0.001}O₄ | - | 3% crystall ine LiFeP 04 | 1% carb on; 8% N | - | 7.5 | 5 | 19.6 | 1.03 4 |
| Exampl e 1 | Li_{0.997}Mn_{0.60}Fe_{0.393}V_{0.004}Co_{0 .003}P_{0.997}S_{0.003}O₄ | 1%Li₂Fe P₂O₇ | 3%LiF ePO₄ | 1% carb on; 8% N | 2 | 7.5 | 5 | 19.0 | 1.02 3 |
| Exampl e2 | Li_{0.997}Mn_{0.60}Fe_{0.393}V_{0.004}Co_{0 .003}P_{0.997}S_{0.003}O₄ | 1%Li₂Fe P₂O₇ | 3%LiF ePO₄ | 3% carb on; 8% N | 2 | 7.5 | 15 | 18.3 | 1.02 3 |
| Exampl e3 | Li_{0.997}Mn_{0.60}Fe_{0.393}V_{0.004}Co_{0 .003}P_{0.997}S_{0.003}O₄ | 1%Li₂Fe P₂O₇ | 3%LiF ePO₄ | 4% carb on; 8% N | 2 | 7.5 | 20 | 18.0 | 1.02 3 |
| Exampl e4 | Li_{0.997}Mn_{0.60}Fe_{0.393}V_{0.004}Co_{0 .003}P_{0.997}S_{0.003}O₄ | 1%Li₂Fe P₂O₇ | 3%LiF ePO₄ | 5% carb on; 8% N | 2 | 7.5 | 25 | 17.9 | 1.02 3 |
| Exampl e 5 | Li_{0.997}Mn_{0.60}Fe_{0.393}V_{0.004}Co_{0 .003}P_{0.997}S_{0.003}O₄ | 2%Li₂Fe P₂O₇ | 3%LiF ePO₄ | 1% carb on; 8% N | 4 | 7.5 | 5 | 18.7 | 1.01 1 |
| Exampl e6 | Li_{0.997}Mn_{0.60}Fe_{0.393}V_{0.004}Co_{0 .003}P_{0.997}S_{0.003}O₄ | 3%Li₂Fe P₂O₇ | 3%LiF ePO₄ | 1% carb on; 8% N | 6 | 7.5 | 5 | 18.3 | 0.99 9 |
| Exampl e7 | Li_{0.997}Mn_{0.60}Fe_{0.393}V_{0.004}Co_{0 .003}P_{0.997}S_{0.003}O₄ | 5%Li₂Fe P₂O₇ | 3%LiF ePO₄ | 1% carb on; 8% N | 10 | 7.5 | 5 | 17.6 | 0.97 5 |
| Exampl e8 | Li_{0.997}Mn_{0.60}Fe_{0.393}V_{0.004}Co_{0 .003}P_{0.997}S_{0.003}O₄ | 1%Li₂Fe P₂O₇ | 1%LiF ePO₄ | 1% carb on; 8% N | 2 | 2.5 | 5 | 19.8 | 1.04 3 |
| Exampl e9 | Li_{0.997}Mn_{0.60}Fe_{0.393}V_{0.004}Co_{0 .003}P_{0.997}S_{0.003}O₄ | 1%Li₂Fe P₂O₇ | 4%LiF ePO₄ | 1% carb on; 8% N | 2 | 10 | 5 | 18.7 | 1.01 4 |
| Exampl e 10 | Li_{0.997}Mn_{0.60}Fe_{0.393}V_{0.004}Co_{0 .003}P_{0.997}S_{0.003}O₄ | 1%Li₂Fe P₂O₇ | 5%LiF ePO₄ | 1% carb on; 8% N | 2 | 12.5 | 5 | 18.4 | 1.00 4 |
| Exampl e 11 | Li_{1.001}Mn_{0.60}Fe_{0.393}V_{0.004}Co_{0 .003}P_{0.999}Si_{0.001}O₄ | 1% Li₂FeP₂O 7 | 2.50% LiFeP 04 | 1.5 % carb on; 8% N | 2 | 6.3 | 7.5 | 19.0 | 1.02 6 |
| Exampl e13 | Li_{0.995}Mn_{0.65}Fe_{0.341}V_{0.004}Co_{0 .005}P_{0.995}S_{0.005}O₄ | 2% Li₂FeP₂O 7 | 2% LiFeP 04 | 2% carb on; 8% N | 4 | 5 | 10 | 18.7 | 1.10 8 |
| Exampl e 14 | Li_{1.002}Mn_{0.70}Fe_{0.293}V_{0.004}Co_{0 .003}P_{0.998}Si_{0.002}O₄ | 2.5%Li₂F eP₂O₇ | 3.50% LiFeP 04 | 2.5 % carb on; 8% N | 5 | 8.8 | 12.5 | 17.8 | 1.16 6 |

As can be seen from table 12 that with the lithium manganese iron phosphate (containing 35% manganese and about 20% phosphorus) subjected to doping at manganese and phosphorus sites and coated with three coating layers, the percentage of element manganese and the weight ratio of element manganese to element phosphorus in the positive electrode active material are significantly reduced. In addition, it can be learned from comparison between Examples 1-14 and Comparative Example 3, Comparative Example 4, and Comparative Example 12 in table 11 that the decrease of elements manganese and phosphorus in the positive electrode active material leads to the decrease of the dissolving-out amounts of manganese and iron and suppresses the improvement of the battery performance of the secondary batteries prepared therefrom.

**Table 13 Performance of positive electrode active material powder and battery performance of the prepared batteries of Examples 30-42**

| Example No. | Performance of positive electrode active material powder | | | | | | Battery performance | | |
|---|---|---|---|---|---|---|---|---|---|
| | Lattic e chang e rate (%) | Li/Mn anti-site defect concentrati on (%) | Compact ed density (g/cm³) | Surfac e oxyge n valenc e | Ratio of 3C consta nt current charge (%) | Dissolvin g-out amounts of Mn and Fe after cycling (ppm) | Button battery capacit y at 0.1C | Cell swellin g rate after 30 days of storage at 60°C (%) | Number of cycles correspondi ng to 80% capacity retention rate at 45°C |
| Example 1 | 2.5 | 1.8 | 2.35 | -1.93 | 77.3 | 7 | 159.9 | 4.5 | 1169 |
| Example 30 | 2.4 | 1.9 | 2.36 | -1.97 | 70.2 | 9 | 155.5 | 6.8 | 1015 |
| Example 31 | 2.5 | 1.7 | 2.36 | -1.96 | 75.2 | 7 | 156.3 | 4.3 | 1098 |
| Example 32 | 2.5 | 1.7 | 2.38 | -1.97 | 75.2 | 16 | 155.9 | 4.4 | 1065 |
| Example 33 | 2.6 | 1.8 | 2.39 | -1.98 | 74.3 | 25 | 156.2 | 5.2 | 1002 |
| Example 34 | 2.6 | 1.9 | 2.34 | -1.96 | 74.6 | 14 | 156.4 | 4.8 | 1065 |
| Example 35 | 2.4 | 1.7 | 2.36 | -1.94 | 73.6 | 12 | 157.5 | 4.9 | 1089 |
| Example 36 | 2.5 | 1.9 | 2.33 | -1.92 | 75.1 | 12 | 155.8 | 5.3 | 1034 |
| Example 37 | 2.5 | 1.7 | 2.34 | -1.92 | 73.8 | 19 | 156.1 | 5.1 | 1065 |
| Example 38 | 2.4 | 1.9 | 2.33 | -1.95 | 73.4 | 25 | 154.7 | 5.7 | 968 |
| Example 39 | 2.2 | 1.8 | 2.36 | -1.94 | 74.6 | 26 | 156.4 | 5.9 | 1026 |
| Example 40 | 2.4 | 1.9 | 2.37 | -1.91 | 74.9 | 33 | 155.8 | 5.5 | 1002 |
| Example 41 | 2.6 | 1.9 | 2.38 | -1.94 | 73.9 | 29 | 154.8 | 5.2 | 996 |
| Example 42 | 2.4 | 1.9 | 2.36 | -1.92 | 75.3 | 17 | 156.8 | 4.4 | 1159 |

As can be seen from table 13, the use of the first coating layer and the second coating layer containing other elements within the scope of this application also obtains positive electrode active materials with good performance and achieves good battery performance results.

**Table 14 Interplanar spacing and included angle of first coating layer substance and second coating layer substance**

| No. | Interplanar spacing of first coating layer substance | Included angle in (111) orientation of first coating layer substance | Interplanar spacing of second coating layer substance | Included angle in (111) orientation of second coating layer substance |
|---|---|---|---|---|
| Example 1 | 0.303 | 29.496 | 0.348 | 25.562 |
| Example 43 | 0.451 | 19.668 | 0.348 | 25.562 |
| Example 44 | 0.297 | 30.846 | 0.348 | 25.562 |
| Example 45 | 0.457 | 19.456 | 0.348 | 25.562 |
| Example 46 | 0.437 | 20.257 | 0.348 | 25.562 |
| Example 47 | 0.462 | 19.211 | 0.348 | 25.562 |
| Example 48 | 0.450 | 19.735 | 0.348 | 25.562 |
| Example 49 | 0.372 | 23.893 | 0.348 | 25.562 |
| Example 50 | 0.303 | 29.496 | 0.374 | 23.789 |
| Example 51 | 0.303 | 29.496 | 0.360 | 24.710 |
| Example 52 | 0.303 | 29.496 | 0.350 | 25.428 |
| Example 53 | 0.303 | 29.496 | 0.425 | 20.885 |
| Example 54 | 0.303 | 29.496 | 0.356 | 24.993 |
| Example 55 | 0.303 | 29.496 | 0.244 | 36.808 |

It can be learned from table 14 that both the interplanar spacing and included angle of the first coating layer and second coating layer in this application are within the range described in this application.

### III. Examination of influence of sintering method of coating layer on performance of positive electrode active material and performance of secondary battery

The batteries in the examples and comparative examples in the table below were prepared in the same way as the battery in Example 1 except for the method parameters used in the table below. See table 13 below for the results.

**Table 15 Influence of sintering temperature and sintering time in steps S4, S6, and S8 on performance of secondary battery**

| No. | Sintering temperat ure in S4 (°C) | Sinteri ng time in S4 (h) | Sintering temperat ure in S6 (°C) | Sinteri ng time in S6 (h) | Sintering temperat ure in S8 (°C) | Sinteri ng time in S8 (h) | Lattic e chang e rate (%) | Li/Mn anti-site defect concentrati on | Compact ed density | Ratio of 3C constan t current charge (%) | Dissolvi ng-out amounts of Mn and Fe after cycling (ppm) | Surfa ce oxyg en valen ce | Butto n batter y capaci ty at 0.1C | Cell swelli ng rate after 30 days of storag e at 60°C | Number of cycles correspond ing to 80% capacity retention rate at 45°C |
|---|---|---|---|---|---|---|---|---|---|---|---|---|---|---|---|
| | | | | | | | | | | | | | (mAh/ g) | (%) | |
| Example I | 650 | 6 | 700 | 8 | 700 | 10 | 2.5 | 1.8 | 2.35 | 77.3 | 7 | -1.93 | 159.9 | 4.5 | 1169 |
| Example II-1 | 750 | 4 | 600 | 6 | 700 | 6 | 3.0 | 2.4 | 2.24 | 67.4 | 12 | -1.95 | 155.3 | 6.3 | 906 |
| Example II-2 | 800 | 4 | 600 | 6 | 700 | 6 | 3.1 | 2.4 | 2.21 | 70.7 | 12 | -1.95 | 154.2 | 6.1 | 923 |
| Example II-3 | 700 | 2 | 600 | 6 | 700 | 6 | 2.9 | 2.3 | 2.20 | 65.4 | 15 | -1.96 | 152.6 | 5.9 | 832 |
| Example II-4 | 700 | 3 | 600 | 6 | 700 | 6 | 2.7 | 2.1 | 2.23 | 67.5 | 14 | -1.96 | 15.36 | 5.3 | 823 |
| Example II-5 | 700 | 4 | 500 | 6 | 700 | 6 | 2.5 | 1.8 | 2.31 | 65.5 | 28 | -1.95 | 154.6 | 4.9 | 802 |
| Example II-6 | 700 | 4 | 700 | 6 | 700 | 6 | 2.5 | 1.8 | 2.34 | 66.7 | 14 | -1.96 | 155.2 | 4.9 | 845 |
| Example II-7 | 700 | 4 | 600 | 8 | 700 | 6 | 2.5 | 1.8 | 2.31 | 70.7 | 11 | -1.95 | 156.9 | 5.2 | 935 |
| Example II-8 | 700 | 4 | 600 | 10 | 700 | 6 | 2.5 | 1.8 | 2.34 | 71.9 | 10 | -1.96 | 156.9 | 4.7 | 1058 |
| Example II-9 | 700 | 4 | 600 | 6 | 750 | 6 | 2.5 | 1.8 | 2.35 | 73.8 | 7 | -1.93 | 158.3 | 4.5 | 1123 |
| Example II-10 | 700 | 4 | 600 | 6 | 800 | 6 | 2.5 | 1.8 | 2.35 | 73.6 | 7 | -1.93 | 157.3 | 4.2 | 1056 |
| Example II-11 | 700 | 4 | 600 | 6 | 700 | 8 | 2.5 | 1.8 | 2.35 | 71.8 | 8 | -1.91 | 156.4 | 4.9 | 975 |
| Example II-12 | 700 | 4 | 600 | 6 | 700 | 10 | 2.5 | 1.8 | 2.35 | 70.0 | 10 | -1.95 | 155.6 | 5.2 | 96 |
| Compara tive Example II-1 | 600 | 3 | 600 | 8 | 750 | 8 | 4.8 | 5.3 | 2.28 | 56.8 | 86 | -1.90 | 145.3 | 11.2 | 559 |
| Compare tive Example II-2 | 850 | 3 | 600 | 8 | 750 | 8 | 5.3 | 4.7 | 2.38 | 60.1 | 84 | -1.91 | 149.5 | 9.6 | 654 |
| Compare tive Example II-3 | 750 | 1.5 | 600 | 8 | 750 | 8 | 4.7 | 4.5 | 2.25 | 55.8 | 87 | -1.91 | 145.7 | 9.1 | 972 |
| Compare tive Example II-4 | 750 | 4.5 | 600 | 8 | 750 | 8 | 4.1 | 4.0 | 2.31 | 61.0 | 79 | -1.92 | 145.8 | 8.3 | 736 |
| Compare tive Example II-5 | 750 | 3 | 450 | 8 | 750 | 8 | 4.8 | 4.6 | 2.28 | 54.7 | 78 | -1.90 | 146.3 | 9.1 | 621 |
| Compare tive Example II-6 | 750 | 3 | 750 | 8 | 750 | 8 | 3.9 | 4.8 | 2.35 | 52.2 | 78 | -1.95 | 148.1 | 8.6 | 593 |
| Compare tive Example II-7 | 750 | 3 | 600 | 5.5 | 750 | 8 | 4.4 | 4.2 | 2.24 | 47.7 | 81 | -1.93 | 146.4 | 8.6 | 623 |
| Compara tive Example II-8 | 750 | 3 | 600 | 10.5 | 750 | 8 | 4.1 | 3.9 | 2.34 | 51.6 | 79 | -1.92 | 145.3 | 8.1 | 673 |
| Compare tive Example II-9 | 750 | 3 | 600 | 8 | 650 | 8 | 5.2 | 4.1 | 2.31 | 50.8 | 81 | -1.93 | 145.7 | 10.6 | 584 |
| Compare tive Example II-10 | 750 | 3 | 600 | 8 | 850 | 8 | 5.0 | 4.0 | 2.34 | 51.6 | 78 | -1.95 | 146.8 | 9.2 | 693 |
| Compare tive Example II-11 | 750 | 3 | 600 | 8 | 750 | 5.5 | 4.3 | 4.2 | 2.27 | 50.2 | 84 | -1.91 | 148.6 | 9.5 | 512 |
| Compare tive Example II-12 | 750 | 3 | 600 | 8 | 750 | 10.5 | 50 | 4.9 | 2.35 | 52.3 | 78 | -1.94 | 146.9 | 9.7 | 662 |

It can be seen from the above that in a case of the sintering temperature being in the range of 650-800°C and the sintering time being 2-6 hours in step S4, the sintering temperature being 500-700°C and the sintering time being 6-10 hours in step S6, and the sintering temperature being 700-800°C and the sintering time being 6-10 hours in step S8, smaller lattice change rate, smaller Li/Mn anti-site defect concentration, less dissolving-out amount of elements manganese and iron, larger ratio of 3C constant current charge, larger battery capacity, better battery cycling performance, and better high-temperature storage stability can be achieved.

In addition, better performance of the positive electrode active material and better battery performance are achieved in Example II-1 (in step S4, the sintering temperature is 750°C and the sintering time is 4 h) as compared with Comparative Example II-4 (in step S4, the sintering temperature is 750°C and the sintering time is 4.5 hours). This indicates that when the sintering temperature in step S4 is 750°C or higher than 750°C, the sintering time needs to be controlled to be less than 4.5 hours.

### IV. Examination of influence of doping element in third coating layer on performance of positive electrode active material and performance of secondary battery

The batteries in the examples and comparative examples in table 16 below were prepared in the same way as the battery in Example 1 except for the method parameters used in the table below. See table 16 below for the results.

**Table 16**

| No. | Type and amount of doping source | Application amount of third coating layer and percentage of doping element | Lattice change rate (%) | Li/Mn anti-site defect concentratio n | Compacte d density | Ratio of 3C constant current charge (%) | Dissolving -out amounts of Mn and Fe after cycling (ppm) | Surface oxygen valence | Button battery capacity at 0.1C | Cell swelling rate after 30 days of storage at 60°C | Number of cycles corresponding to 80% capacity retention rate at 45°C |
|---|---|---|---|---|---|---|---|---|---|---|---|
| | | | | | | | | | (mAh/g) | (%) | |
| Comparative Example 18 | 0 | 1% carbon; 0% N | 2.5 | 1.8 | 2.35 | 69.3 | 7 | -1.93 | 149.5 | 4.3 | 1123 |
| Example IV-1 | 0.170 g ethylenediamin e | 1% carbon; 0.5% N | 2.5 | 1.8 | 2.35 | 70.7 | 8 | -1.93 | 151.3 | 4.6 | 1125 |
| Example IV-2 | 0.343 g ethylenediamin e | 1% carbon; 1% N | 2.5 | 1.8 | 2.35 | 75.4 | 11 | -1.93 | 157.4 | 4.2 | 1189 |
| Example IV-3 | 7.194 g ethylenediamin e | 1% carbon; 15% N | 2.5 | 1.8 | 2.35 | 77.3 | 10 | -1.93 | 159.9 | 4.2 | 1166 |
| Example IV-4 | 10.80 g ethylenediamin e | 1% carbon; 20% N | 2.5 | 1.8 | 2.35 | 75.7 | 9 | -1.93 | 157.8 | 4.6 | 1145 |
| Example IV-5 | 15.8 g ethylenediamin e | 1% carbon; 25% N | 2.5 | 1.8 | 2.35 | 73.1 | 6 | -1.93 | 154.5 | 4.1 | 1163 |
| Example IV-6 | 33.70 g ethylenediamin e | 1% carbon; 35% N | 2.5 | 1.8 | 2.35 | 72.1 | 10 | -1.93 | 153.2 | 4.8 | 1159 |
| Example IV-7 | 0.117 g phosphoric acid | 1% carbon; 0.2% P | 2.5 | 1.8 | 2.35 | 71.0 | 7 | -1.93 | 151.7 | 4.9 | 1171 |
| Example IV-8 | 0.2934 g phosphoric acid | 1% carbon; 0.5% P | 2.5 | 1.8 | 2.35 | 72.8 | 8 | -1.93 | 153.4 | 4.2 | 1118 |
| Example IV-9 | 1.806 g phosphoric acid | 1% carbon; 3% P | 2.5 | 1.8 | 2.35 | 75.2 | 6 | -1.93 | 157.2 | 4.3 | 1145 |
| Example IV-10 | 3.074 g phosphoric acid | 1% carbon; 5% P | 2.5 | 1.8 | 2.35 | 77.1 | 8 | -1.93 | 159.6 | 4 | 1174 |
| Example IV-11 | 5.078 g phosphoric acid | 1% carbon; 8% P | 2.5 | 1.8 | 2.35 | 75.4 | 7 | -1.93 | 157.4 | 4.2 | 1098 |
| Example IV-12 | 7.965 g phosphoric acid | 1% carbon; 12% P | 2.5 | 1.8 | 2.35 | 73.1 | 6 | -1.93 | 154.4 | 4.8 | 1197 |
| Example IV-13 | 14.6 g phosphoric acid | 1% carbon; 20% P | 2.5 | 1.8 | 2.35 | 72.6 | 8 | -1.93 | 153.8 | 4.7 | 1128 |
| Example IV-14 | 0.403 g sulfuric acid | 1% carbon; 0.5% S | 2.5 | 1.8 | 2.35 | 70.8 | 7 | -1.93 | 151.4 | 4.2 | 1146 |
| Example IV-15 | 0.809 g sulfuric acid | 1% carbon; 1% S | 2.5 | 1.8 | 2.35 | 71.6 | 8 | -1.93 | 153.2 | 4.6 | 1175 |
| Example IV-16 | 6.97 g sulfuric acid | 1% carbon; 8% S | 2.5 | 1.8 | 2.35 | 75.7 | 7 | -1.93 | 157.8 | 4.1 | 1204 |
| Example IV-17 | 14.15 g sulfuric acid | 1% carbon; 15% S | 2.5 | 1.8 | 2.35 | 77.0 | 8 | -1.93 | 159.5 | 4.2 | 1208 |
| Example IV-18 | 20.034 g sulfuric acid | 1% carbon; 20% S | 2.5 | 1.8 | 2.35 | 75.4 | 9 | -1.93 | 157.4 | 4.4 | 1149 |
| Example IV-19 | 26.712 g sulfuric acid | 1% carbon; 25% S | 2.5 | 1.8 | 2.35 | 72.9 | 10 | -1.93 | 154.2 | 4.6 | 1143 |
| Example IV-20 | 43.15 g sulfuric acid | 1% carbon; 35% S | 2.5 | 1.8 | 2.35 | 72.6 | 6 | -1.93 | 153.8 | 4.4 | 1182 |
| Example IV-21 | 0.180 g boric acid | 1% carbon; 0.2% B | 2.5 | 1.8 | 2.35 | 70.8 | 8 | -1.93 | 151.4 | 4.8 | 1184 |
| Example IV-22 | 0.450 g boric acid | 1% carbon; 0.5% B | 2.5 | 1.8 | 2.35 | 72.4 | 7 | -1.93 | 153.4 | 4.6 | 1165 |
| Example IV-23 | 2.740 g boric acid | 1% carbon; 3% B | 2.5 | 1.8 | 2.35 | 75.5 | 9 | -1.93 | 157.6 | 4.3 | 1143 |
| Example IV-24 | 4.660 g boric acid | 1% carbon; 5% B | 2.5 | 1.8 | 2.35 | 77.1 | 10 | -1.93 | 159.7 | 4.2 | 1141 |
| Example IV-25 | 7.70 g boric acid | 1% carbon; 8% B | 2.5 | 1.8 | 2.35 | 75.4 | 8 | -1.93 | 157.4 | 4.1 | 1175 |
| Example IV-26 | 12.067 g boric acid | 1% carbon; 12% B | 2.5 | 1.8 | 2.35 | 73.1 | 9 | -1.93 | 154.4 | 4.8 | 1146 |
| Example IV-27 | 22.123 g boric acid | 1% carbon; 20% B | 2.5 | 1.8 | 2.35 | 72.1 | 7 | -1.93 | 153.2 | 4.6 | 1123 |
| Example IV-28 | 0.083 g hydrofluoric acid | 1% carbon; 0.2% F | 2.5 | 1.8 | 2.35 | 70.8 | 8 | -1.93 | 151.4 | 4.5 | 1182 |
| Example IV-29 | 0.208 g hydrofluoric acid | 1% carbon; 0.5% F | 2.5 | 1.8 | 2.35 | 71.4 | 9 | -1.93 | 152.8 | 4.7 | 1146 |
| Example IV-30 | 1.278 g hydrofluoric acid | 1% carbon; 3% F | 2.5 | 1.8 | 2.35 | 75.3 | 10 | -1.93 | 157.3 | 4.9 | 1149 |
| Example IV-31 | 2.175 g hydrofluoric acid | 1% carbon; 5% F | 2.5 | 1.8 | 2.35 | 77.1 | 8 | -1.93 | 159.7 | 4.7 | 1172 |
| Example IV-32 | 3.593 g hydrofluoric acid | 1% carbon; 8% F | 2.5 | 1.8 | 2.35 | 75.2 | 9 | -1.93 | 157.2 | 4.6 | 1146 |
| Example IV-33 | 5.634 g hydrofluoric acid | 1% carbon; 12% F | 2.5 | 1.8 | 2.35 | 73.2 | 8 | -1.93 | 154.6 | 4.6 | 1142 |
| Example IV-34 | 10.329 g hydrofluoric acid | 1% carbon; 20% F | 2.5 | 1.8 | 2.35 | 72.3 | 9 | -1.93 | 153.4 | 4.1 | 1128 |

It can be seen from table 16 that the doping element in the carbon layer being N, P, S, B, or F can increase the reversible specific capacity and ratio of 3C constant current charge of the material, and the average discharge voltage of the button cell. For example, as compared with Comparative Example 18, Example IV-4 has an increase in both the 0.1C gram capacity and average discharge voltage of the button cell. Adjusting the percentage of the doping element in the carbon layer can further increase the reversible specific capacity and ratio of 3C constant current charge of the material, and the average discharge voltage of the button cell. For example, when the doping percentage of N varies from 0% to 30%, the 0.1C specific capacity and average discharge voltage of the button cell increase first and then decrease.

### V. Examination of influence of reaction temperature and reaction time for core preparation on performance of positive electrode active material and performance of battery

The positive electrode active materials and batteries in Examples V-1 to V-20 in the table below were prepared in the same way as the battery in Example 1 except that the third coating layer in the examples was doped with no other elements. See the method parameters in the table below for differences in the preparation of the positive electrode active materials. The results are also shown in the following table.

**Table 17 Influence of reaction temperature and reaction time for core preparation on performance of positive electrode active material and performance of secondary battery**

| No. | Step S1 | | Step S2 | | Lattice change rate (%) | Li/Mn anti-site defect concentrat ion (%) | Compact ed density (g/cm³) | Ratio of 3C constant current charge (%) | Dissolving-out amounts of Mn and Fe after cycling (ppm) | Surface oxygen valence | Button cell capacity at O.lC (mAh/g) | Cell swelling rate after 30 days of storage at 60°C (%) | Number of cycles correspondin g to 80% capacity retention rate at 45°C |
|---|---|---|---|---|---|---|---|---|---|---|---|---|---|
| | Reaction temperat ure (°C) | Reactio n time (h) | Reaction temperat ure (°C) | Reacti on time (h) | | | | | | | | | |
| Exampl eV-1 | 80 | 6 | 80 | 10 | 2.5 | 1.8 | 2.35 | 70.3 | 7 | -1.93 | 157.2 | 4.2 | 1128 |
| Exampl eV-2 | 70 | 6 | 80 | 10 | 2.8 | 3.4 | 2.30 | 60.1 | 34 | -1.93 | 155.4 | 5.8 | 876 |
| Exampl eV-3 | 60 | 6 | 80 | 10 | 3.1 | 3.1 | 2.33 | 64.2 | 18 | -1.92 | 156.2 | 5.1 | 997 |
| Exampl eV-4 | 100 | 6 | 80 | 10 | 2.3 | 2.4 | 2.37 | 71.3 | 7 | -1.94 | 156.8 | 4.1 | 1137 |
| Exampl eV-5 | 120 | 6 | 80 | 10 | 2.1 | 2.2 | 2.38 | 72.1 | 5 | -1.92 | 155.4 | 4.0 | 1158 |
| Exampl eV-6 | 80 | 2 | 80 | 10 | 2.8 | 3.2 | 2.27 | 68.4 | 24 | -1.90 | 154.9 | 5.1 | 895 |
| Exampl eV-7 | 80 | 3 | 80 | 10 | 2.6 | 2.7 | 2.29 | 69.7 | 17 | -1.92 | 156.1 | 4.7 | 967 |
| Exampl eV-8 | 80 | 5 | 80 | 10 | 2.4 | 1.9 | 2.34 | 70.6 | 8 | -1.94 | 156.8 | 4.3 | 1137 |
| Exampl eV-9 | 80 | 7 | 80 | 10 | 2.5 | 1.8 | 2.35 | 68.3 | 11 | -1.94 | 156.4 | 4.8 | 987 |
| Exampl eV-10 | 80 | 9 | 80 | 10 | 2.6 | 1.8 | 2.36 | 67.2 | 15 | -1.93 | 155.9 | 5.2 | 921 |
| Exampl eV-11 | 80 | 6 | 40 | 10 | 3.2 | 3.4 | 2.28 | 67.8 | 35 | -1.94 | 156.8 | 5.4 | 894 |
| Exampl eV-12 | 80 | 6 | 60 | 10 | 2.8 | 2.9 | 2.31 | 68.7 | 18 | -1.95 | 157.0 | 4.9 | 927 |
| Exampl eV-13 | 80 | 6 | 80 | 10 | 2.5 | 2.7 | 2.35 | 70.3 | 7 | -1.93 | 157.2 | 4.2 | 1128 |
| Exampl eV-14 | 80 | 6 | 100 | 10 | 2.7 | 2.8 | 2.33 | 69.4 | 15 | -1.93 | 156.7 | 4.6 | 957 |
| Exampl eV-15 | 80 | 6 | 120 | 10 | 2.8 | 3.1 | 2.32 | 68.1 | 24 | -1.94 | 156.2 | 4.8 | 914 |
| Exampl eV-16 | 80 | 6 | 90 | 1 | 3.7 | 3.8 | 2.26 | 67.9 | 38 | -1.93 | 155.8 | 5.2 | 885 |
| Exampl eV-17 | 80 | 6 | 90 | 3 | 3.4 | 3.4 | 2.31 | 68.2 | 32 | -1.94 | 156.1 | 4.8 | 915 |
| Exampl eV-18 | 80 | 6 | 90 | 5 | 3.1 | 3.1 | 2.33 | 69.1 | 27 | -1.92 | 156.4 | 4.6 | 934 |
| Exampl eV-19 | 80 | 6 | 90 | 7 | 2.8 | 2.9 | 2.34 | 69.4 | 15 | -1.93 | 156.8 | 4.5 | 971 |
| Exampl eV-20 | 80 | 6 | 90 | 9 | 2.5 | 2.7 | 2.35 | 70.3 | 7 | -1.93 | 157.2 | 4.2 | 1128 |

It can be seen from table 17 that in a case of the reaction temperature being in the range of 60-120°C and the reaction time being 2-9 hours in step S 1, and the reaction temperature being in the range of 40-120°C and the reaction time being 1-10 hours in step S2, both the performance (lattice change rate, Li/Mn anti-site defect concentration, surface oxygen valence, and compacted density) of the positive electrode active material powder and the performance (electrical capacity, high-temperature cycling performance, and high-temperature storage performance) of the battery prepared are excellent.

The processes of Examples 1 to 42 were repeated, with the only difference being the absence of ethylenediamine during the preparation of the third coating layer to make a carbon coating layer as the third coating layer. As such, Comparative Example 1-1 to Comparative Example 1-42 were formed. The obtained positive electrode active materials were then subjected to composition, structure, and performance testing using the foregoing method. It is found that whether the third coating layer is doped with element nitrogen or not has no influence on the composition and structure of the core, first coating layer, and second coating layer, but has influence on the performance of the battery. See table 18 for the test results.

**Table 18 Performance of positive electrode active material powder and battery performance of batteries prepared in Comparative Example 1-1 to Comparative Example 1-42**

| | Ratio of 3C constant current charge (%) | Dissolving-out amounts of Mn and Fe after cycling (ppm) | Button cell capacity at 0.1C (mAh/g) | Cell swelling rate after 30 days of storage at 60°C (%) | Number of cycles corresponding to 80% capacity retention rate at 45 °C |
|---|---|---|---|---|---|
| Comparative Example I-1 | 70.3 | 7 | 157.2 | 4.2 | 1128 |
| Comparative Example I-2 | 70.2 | 6 | 156.3 | 3.7 | 1253 |
| Comparative Example I-3 | 70.1 | 5 | 155.4 | 3.4 | 1374 |
| Comparative Example I-4 | 70.2 | 3 | 153.7 | 2.9 | 1406 |
| Comparative Example I-5 | 70.1 | 5 | 156.7 | 3.1 | 1501 |
| Comparative Example I-6 | 69.7 | 4 | 156.2 | 2.8 | 1576 |
| Comparative Example I-7 | 68.4 | 3 | 155.8 | 2.5 | 1647 |
| Comparative Example I-8 | 69.1 | 9 | 156.4 | 3.4 | 1058 |
| Comparative Example I-9 | 73.4 | 6 | 157.6 | 2.9 | 1286 |
| Comparative Example I-10 | 75.4 | 5 | 157.8 | 2.5 | 1486 |
| Comparative Example I-11 | 72.4 | 6 | 157.3 | 3.5 | 1026 |
| Comparative Example I-12 | 74.5 | 4 | 156.3 | 2.5 | 1136 |
| Comparative Example I-13 | 75.3 | 5 | 156.6 | 3.5 | 1207 |
| Comparative Example I-14 | 76.5 | 3 | 153.8 | 3.7 | 1308 |
| Comparatibe Example I-15 | 74.3 | 3 | 153.8 | 3.7 | 1109 |
| Comparative Example I-16 | 73.1 | 5 | 154.2 | 3.8 | 1132 |
| Comparative Example I-17 | 75.3 | 4 | 155.4 | 4.5 | 1258 |
| Comparative Example I-18 | 76.1 | 4 | 154.3 | 4.7 | 1378 |
| Comparative Example I-19 | 76.8 | 4 | 154.3 | 4.7 | 1328 |
| Comparative Example I-20 | 75.4 | 4 | 153.9 | 3.3 | 1458 |
| Comparative Example I-21 | 76.1 | 4 | 154.5 | 3.5 | 1327 |
| Comparative Example I-22 | 72.1 | 2 | 152.1 | 2.7 | 1556 |
| Comparative Example I-23 | 76.4 | 3 | 151.4 | 2.4 | 1645 |
| Comparative Example I-24 | 76.3 | 3 | 152.1 | 2.5 | 1548 |
| Comparative Example I-25 | 78.4 | 3 | 158.6 | 2.9 | 1538 |
| Comparative Example I-26 | 56.4 | 8 | 152.3 | 4.8 | 1017 |
| Comparative Example I-27 | 74.3 | 6 | 155.4 | 3.8 | 1126 |
| Comparative Example I-28 | 54.7 | 9 | 154.9 | 6.4 | 986 |
| Comparative Example I-29 | 68.4 | 7 | 155.6 | 4.5 | 1047 |
| Comparative Example I-30 | 68.7 | 15 | 156.2 | 4.8 | 1018 |
| Comparative Example I-31 | 70.1 | 12 | 155.6 | 4.6 | 1087 |
| Comparative Example I-32 | 69.1 | 14 | 155.9 | 4.3 | 1054 |
| Comparative Example I-33 | 69.4 | 23 | 156.2 | 5.3 | 997 |
| Comparative Example I-34 | 71.3 | 16 | 156.4 | 4.6 | 1004 |
| Comparative Example I-35 | 70.9 | 11 | 157.5 | 5.1 | 1102 |
| Comparative Example I-36 | 71.6 | 14 | 155.8 | 5.4 | 1024 |
| Comparative Example I-37 | 68.4 | 18 | 156.1 | 4.9 | 1054 |
| Comparative Example I-38 | 67.5 | 27 | 154.7 | 5.9 | 954 |
| Comparative Example I-39 | 69.4 | 24 | 156.4 | 5.7 | 1017 |
| Comparative Example I-40 | 71.6 | 31 | 155.8 | 5.3 | 991 |
| Comparative Example I-41 | 70.8 | 27 | 154.8 | 5.1 | 975 |
| Comparative Example I-42 | 71.5 | 15 | 156.8 | 4.2 | 1154 |

It can be found through table 18 and the comparison of data in table 11, table 13, and table 18 that doping nitrogen, sulfur, phosphorus, boron, or fluorine into the third coating layer alters the charge distribution around carbon atoms, thereby increasing the conductivity of the carbon layer. Additionally, the doping element can create a defect structure in the carbon material, facilitating the rapid migration of lithium ions. Further, the doping element generates a new functional group containing the doping element on the carbon surface, thereby forming new active sites, increasing the solvation and desolvation speed of lithium ions, and thus improving the kinetic performance of the material. This helps to increase the capacity, average discharge voltage, and 3C charge constant current ratio.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification, but includes all technical solutions falling within the scope of the claims.

## Claims

1. A positive electrode active material having a core-shell structure, comprising a core and a shell enveloping the core; wherein
chemical formula of the core is Li₁₊ₓMn_{1-y}A_{y}P_{1-z}R_{z}O₄, wherein x is any value in the range of -0.100 to 0.100, y is any value in the range of 0.001 to 0.500, z is any value in the range of 0.001 to 0.100, A is one or more elements selected from a group consisting of Zn, Al, Na, K, Mg, Mo, W, Ti, V, Zr, Fe, Ni, Co, Ga, Sn, Sb, Nb, and Ge, and optionally one or more elements from a group consisting of Fe, Ti, V, Ni, Co, and Mg, and R is one or more elements selected from a group consisting of B, Si, N, and S, and optionally R is one element selected from B, Si, N, and S;
the values of x, y, and z satisfy the following condition that the entire core is electrically neutral;
the shell comprises a first coating layer enveloping the core, a second coating layer enveloping the first coating layer, and a third coating layer enveloping the second coating layer; wherein
the first coating layer comprises a crystalline pyrophosphate LiₐMP₂O₇ and/or M_{b}(P₂O₇)_{c}, wherein
0≤a≤2, 1≤b≤4, 1≤c≤6, and the values of a, b, and c satisfy the following condition that the crystalline pyrophosphate LiₐMP₂O₇ or M_{b}(P₂O₇)_{c} is electrically neutral, and
each M in the crystalline pyrophosphate LiₐMP₂O₇ and M_{b}(P₂O₇)_{c} is independently one or more elements selected from a group consisting of Fe, Ni, Mg, Co, Cu, Zn, Ti, Ag, Zr, Nb, and Al;
the second coating layer comprises a crystalline phosphate XPO₄, wherein X is one or more elements selected from a group consisting of Li, Fe, Ni, Mg, Co, Cu, Zn, Ti, Ag, Zr, Nb, and Al; and
the third coating layer comprises a carbon matrix and a doping element, the doping element comprising one or more selected from a group consisting of nitrogen, phosphorus, sulfur, boron, and fluorine.

2. The positive electrode active material according to claim 1, wherein based on weight of the core, an application amount of the third coating layer is greater than Owt% and less than or equal to 6wt%, optionally greater than Owt% and less than or equal to 5.5wt%, and more optionally greater than Owt% and less than or equal to 2wt%; and optionally, thickness of the third coating layer is 2-25 nm.

3. The positive electrode active material according to claim 1 or 2, wherein a mass percentage of the doping element in the third coating layer is below 30%, and optionally, a mass percentage of the doping element in the third coating layer is below 20%.

4. The positive electrode active material according to any one of claims 1 to 3, wherein
the doping element is element nitrogen or element sulfur, and a mass percentage of the doping element in the third coating layer is 1%-15%;
optionally, the doping element is element phosphorus, element boron, or element fluorine, and a mass percentage of the doping element in the third coating layer is 0.5%-5%; or
optionally, the doping element is nitrogen, phosphorus, sulfur, boron, or fluorine.

5. The positive electrode active material according to any one of claims 1 to 4, wherein carbon in the third coating layer is a mixture of SP2 carbon and SP3 carbon; and optionally a molar ratio of SP2 carbon to SP3 carbon is any value in the range of 0.1-10, and optionally any value in the range of 1.5-3.0.

6. The positive electrode active material according to any one of claims 1 to 5, wherein the crystalline pyrophosphate in the first coating layer has an interplanar spacing of 0.293-0.470 nm and an included angle of 18.00°-32.00° in the (111) orientation, and the crystalline phosphate in the second coating layer has an interplanar spacing of 0.244-0.425 nm and an included angle of 20.00°-37.00° in the (111) orientation.

7. The positive electrode active material according to any one of claims 1 to 6, wherein a ratio of y to 1-y in the core is 1:10 to 1:1, and optionally 1:4 to 1:1.

8. The positive electrode active material according to any one of claims 1 to 7, wherein a ratio of z to 1-z in the core is 1:9 to 1:999, and optionally 1:499 to 1:249.

9. The positive electrode active material according to any one of claims 1 to 8, wherein
an application amount of the first coating layer is greater than Owt% and less than or equal to 6wt% based on weight of the core, optionally greater than Owt% and less than or equal to 5.5wt%, and more optionally greater than Owt% and less than or equal to 2wt%; and/or
an application amount of the second coating layer is greater than Owt% and less than or equal to 6wt% based on weight of the core, optionally greater than Owt% and less than or equal to 5.5wt%, and more optionally 2wt%-4wt%.

10. The positive electrode active material according to any one of claims 1 to 9, wherein thickness of the first coating layer is 1-10 nm, and/or
thickness of the second coating layer is 2-15 nm.

11. The positive electrode active material according to any one of claims 1 to 10, wherein
based on weight of the positive electrode active material, a percentage of element manganese is in the range of 10wt%-35wt%, optionally in the range of 15wt%-30wt%, and more optionally in the range of 17wt%-20wt%, and a percentage of element phosphorus is in the range of 12wt%-25wt%, and optionally in the range of 15wt%-20wt%, a weight ratio of element manganese to element phosphorus being in the range of 0.90-1.25, and optionally 0.95-1.20.

12. The positive electrode active material according to any one of claims 1 to 11, wherein a lattice change rate of the positive electrode active material before and after complete deintercalation or intercalation of lithium is below 4%, optionally below 3.8%, and more optionally from 2.0% to 3.8%.

13. The positive electrode active material according to any one of claims 1 to 12, wherein Li/Mn anti-site defect concentration of the positive electrode active material is below 4%, optionally below 2.2%, and more optionally from 1.5% to 2.2%.

14. The positive electrode active material according to any one of claims 1 to 13, wherein compacted density of the positive electrode active material under 3T is above 2.2 g/cm³, and optionally above 2.2 g/cm³ and below 2.8 g/cm³.

15. The positive electrode active material according to any one of claims 1 to 14, wherein a surface oxygen valence of the positive electrode active material having a core-shell structure is below -1.90, and optionally from -1.90 to -1.98.

16. A positive electrode plate, comprising a positive electrode current collector and a positive electrode film layer provided on at least one surface of the positive electrode current collector, wherein the positive electrode film layer comprises the positive electrode active material according to any one of claims 1 to 15; and optionally, based on total weight of the positive electrode film layer, a percentage of the positive electrode active material in the positive electrode film layer is above 10wt%, and further optionally from 95wt% to 99.5wt%.

17. A secondary battery, comprising the positive electrode active material according to any one of claims 1 to 15 or the positive electrode plate according to claim 16.

18. A battery module, comprising a secondary battery, wherein the secondary battery is the secondary battery according to claims 17.

19. A battery pack, comprising a battery module, wherein the battery module is the battery module according to claim 18.

20. An electric apparatus, comprising a secondary battery, a battery module, or a battery pack, wherein the secondary battery is selected from the secondary battery according to claim 17, the battery module is the battery module according to claim 18, or the battery pack is the battery pack according to claim 19.
